(19) Europäisches Patentamt / European Patent Office / Office européen des brevets

(11) **EP 3 376 128 B1**

(12) **EUROPEAN PATENT SPECIFICATION**

(45) Date of publication and mention of the grant of the patent:
**18.10.2023 Bulletin 2023/42**

(21) Application number: **18160581.7**

(22) Date of filing: **07.03.2018**

(51) International Patent Classification (IPC):
**F24F 11/65** (2018.01)   **F24F 11/54** (2018.01)
**F24F 11/46** (2018.01)   **F24F 11/86** (2018.01)
**F24F 110/10** (2018.01)   **F24F 140/20** (2018.01)
**F24F 140/50** (2018.01)

(52) Cooperative Patent Classification (CPC):
**F24F 11/65; F24F 11/46; F24F 11/54; F24F 11/86;**
F24F 2110/10; F24F 2140/20; F24F 2140/50

(54) **CONTROL STRUCTURE OF AN AIR-CONDITIONING SYSTEM AND CONTROL METHOD OF THE SAME**

STEUERUNGSSTRUKTUR EINER KLIMAANLAGE UND STEUERUNGSVERFAHREN DAFÜR

STRUCTURE DE COMMANDE D'UN SYSTÈME DE CLIMATISATION ET PROCÉDÉ DE COMMANDE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2017 CN 201710151811**

(43) Date of publication of application:
**19.09.2018 Bulletin 2018/38**

(73) Proprietors:
• **Johnson Controls Technology Company**
  **Auburn Hills, MI 48326-2773 (US)**
• **York Guangzhou Air Conditioning and Refrigeration Co., Ltd.**
  **511685 Qingyuan City, Guang Dong (CN)**

(72) Inventors:
• **YU, Peter**
  **Wuxi, 32 214028 (CN)**
• **WU, Vincent**
  **Wuxi, 32 214028 (CN)**

(74) Representative: **Meissner Bolte Partnerschaft mbB**
**Patentanwälte Rechtsanwälte**
**Postfach 10 26 05**
**86016 Augsburg (DE)**

(56) References cited:
EP-A2- 0 668 474        WO-A1-2016/158852
CN-B- 102 353 122       JP-A- 2005 114 295
JP-A- 2007 225 264      JP-A- 2016 048 145
KR-A- 20130 053 936     US-A1- 2011 283 718
US-A1- 2012 174 609

## Description

TECHNICAL FIELD

The present disclosure relates to an air-conditioning system having modular air-cooled water-cooled chillers (heat pumps), and more particularly to a structure and a method for adjusting and controlling energy of a full-frequency-conversion modular air-cooled water-cooled chiller (heat pump) set in an air-conditioning system.

BACKGROUND

Conventional air-conditioning systems have a modular air -cooled water-cooled chiller (heat pump) set (hereinafter referred to as "modular set" in brief). The modular set, as a large-capacity air-conditioning unit combined by a plurality of small-capacity air- cooled water-cooled chiller (heat pump) sets, has advantages like flexibility, convenience, energy-conservation, and reliability. Conventional modular sets basically employ an invariable-frequency compressor; in practical use, such modular sets have disadvantages such as frequent start/ stop and large fluctuation of water temperature. With increasingly higher demands on energy conservation and wider application of frequency-conversion technologies, it will be a trend for modular sets to use frequency-conversion compressors. However, if a frequency-conversion system is adopted, a set of energy adjusting and controlling methods is essential for efficient operation of the modular set. The present technical solution ensures efficient operation of the modular unit through smart control in accordance with the characteristics of a frequency-conversion set.

However, in the existing schemes for adjusting and controlling energy of a modular set, compressor load/unload are controlled based on a difference between a water temperature and a target temperature as well as a water temperature change trend; the consequence is that the compressor will frequently start/stop, which causes a waste in electrical energy and a large water temperature fluctuation. If a similar approach is still employed after the modular set employs a frequency conversion system, the frequency changer set cannot exert its advantages.

For example, US 2012/174609 A1 relates to a conventional heat source system including a plurality of heat source apparatuses connected in parallel, and a number-of-units control device that controls on and off of the plurality of the heat source apparatuses and allocates a load to an active heat source apparatus according to a load demand, wherein the heat source apparatuses each possess a coefficient of performance, COP, map unique to the respective heat source apparatuses that indicates a relationship between a operating status, a COP , and load factor, each of the heat source apparatuses sets the appropriate operation region in correspondence to the operating status from the COP map and sends it to the number-of-units control device, and the number-of-units control device performs number-of-units control of the heat source apparatuses and load allocation on the basis of the appropriate operating region that is sent from each of the heat source apparatuses.

Therefore, it is desirable to provide an improved structure and method for controlling an air-conditioning system that has a frequency conversion modular set so as to improve and enhance operation efficiency of the air-conditioning system that has the frequency conversion modular set.

SUMMARY

The invention is defined by the appended claims.

BRIEF DESCRIPTION OF THE DRAWINGS

These features and advantages of the present disclosure may be better understood from the accompanying drawings below. Throughout the drawings, the same reference numerals represent the same components, in which:

Fig. 1 is a schematic structural diagram of an air-conditioning system 100 of the present disclosure;

Fig. 2 is an energy efficiency output diagram of each frequency conversion modular unit (112.1, 112.2 , ..., 112.N) in a frequency conversion modular set 102 under different load ratios;

Fig. 3 is a schematic internal structural diagram of the main controller 118 in Fig. 1;

Fig. 4 is a control flow chart representing the procedures the main controller 118 controls the frequency conversion modular units (112.1, 112.2, ..., 112.N);

Fig. 5 shows more detailed steps in a set load procedure in step 412;

Fig. 6 shows more detailed steps in a set capability holding procedure in step 414;

Fig. 7 shows more detailed steps in a set unload procedure in step 416;

Fig. 8 shows specific steps of transmitting a frequency load amount to each frequency conversion modular unit in step 518;

Fig. 9 shows specific steps of transmitting a frequency load/unload amount to each frequency conversion modular unit in step 524;

Fig. 10 shows specific steps of transmitting a frequency load/unload amount to each frequency conversion modular unit in step 602;

Fig. 11 shows specific steps of transmitting g a frequency load/unload amount to each frequency conversion modular unit in step 714;

Fig. 12 shows specific steps of transmitting g a frequency unload amount to each frequency conversion modular unit in step 716.

DETAILED DESCRIPTION OF THE PREFERRED EMBODIMENTS

Hereinafter, various preferred embodiments of the present invention will be described with reference to the accompanying drawings as a constituent part of the description. It should be noted that although terms indicating directions (such as "front," "back," "up," "down," "left," and "right") are used herein to describe various exemplary structural parts and elements of the present disclosure, these terms are only for facilitating the depiction and are determined based on the exemplary orientations shown in Figures. Because the examples disclosed in the present disclosure may be arranged based on different directions, these direction terms are only used for illustration and should not be regarded as limiting. In these Figures, same or similar reference numerals used herein indicate the same components, to avoid repetitive description.

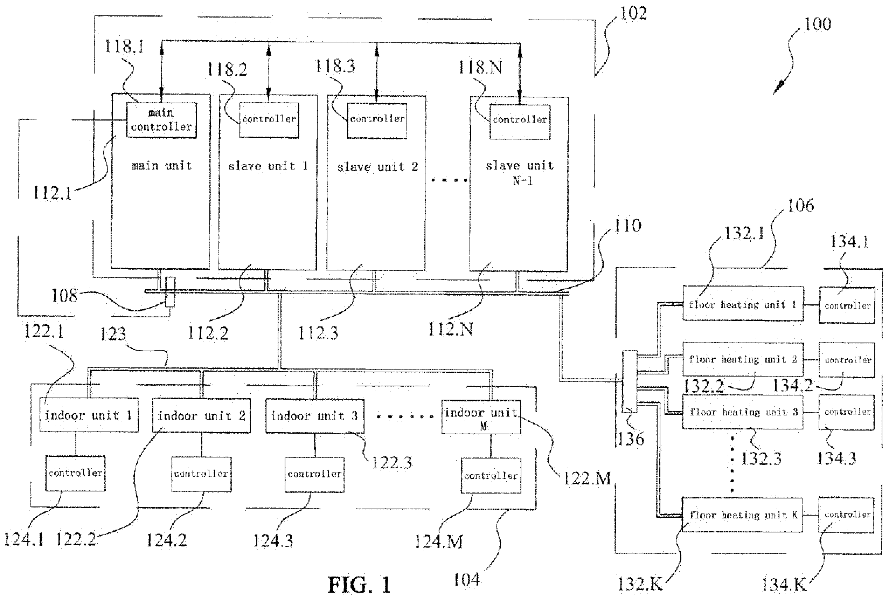

Fig. 1 is a schematic structural diagram of an air-conditioning system 100 of the present disclosure. As shown in Fig. 1, the air-conditioning system 100 comprises a frequency conversion modular set 102, an indoor unit set 104, and a floor heating apparatus 106.

The frequency conversion modular set 102 comprises a plurality of frequency conversion modular units (112.1, 112.2, ..., 112.N); each frequency conversion modular unit includes a compressor, a condenser, an expansion valve, and an evaporator (not shown). During a refrigeration process, a high-temperature high-pressure gaseous cooling medium discharged from the compressor exchanges heat with an environment medium in the condenser, the released heat being liquified and condensed; the expansion valve throttles the high-pressure liquid cooling medium from the condenser so as to lower its pressure; the low pressure cooling medium exchanges heat with an object to be cooled inside the evaporator and absorb the heat from the object to be cooled, and become gasified and then evaporated; the gasified cooling medium steam is drawn in by the compressor, compressed and discharged in high pressure. This process is repeated to generate a continuous refrigeration effect. During a heating process, the high-temperature high-pressure gaseous cooling medium discharged from the compressor exchanges heat with an object to be heated inside the condenser, the released heat being liquified and condensed; the expansion valve throttles the high-pressure liquid cooling medium from the condenser to lower its pressure; the low pressure cooling medium exchanges heat with the environment medium inside the evaporator and absorbs heat from the environment medium, and become gasified and then evaporated; the gasified refrigerant steam is drawn in by the compressor, compressed, and then discharged in high pressure. This process is repeated to generate a continuous heating effect. To output energy, one side of the evaporator is connected with the cooling medium, and the other side of the evaporator is connected with a frequency conversion modular set water pipe 110. During operation, corresponding increase or decrease of the compressor frequency can correspondingly increase or decrease a rotary speed of the compressor, thereby increasing or decreasing cooling medium flow rate outputted by the compressor, while increase or decrease of the refrigerant flow may increase or decrease a temperature output energy. In the present disclosure, adjustment of the temperature output energy is implemented by adjusting the loading frequency of the compressor.

The function of the indoor units is, using a cooling or heating function provided by the frequency conversion modular set 102, to lower an air temperature within a certain indoor area or raise the air temperature within the certain indoor area. In the present disclosure, the indoor unit set 104 comprises a plurality of indoor units (122.1, 122.2, ..., 122.M), an energy receiving end of each indoor unit being connected with a frequency conversion modular set water pipe 110 to receive a temperature source from the frequency conversion modular set 102, while a control end thereof is connected with controllers (124.1, 124.2, ..., 124.M). Each controller controls the water flow rate and wind speed of a corresponding indoor unit, thereby controlling the indoor temperature.

The function of the floor heating unit is to raise an air temperature within a certain indoor area by using the heating function provided by the frequency conversion modular set 102. In the present disclosure, the floor heating apparatus 106 comprises a plurality of floor heating units (132.1, 132.2, ..., 132.K) each floor heating unit being connected with the frequency conversion modular set water pipe 110 via its water pipe and a distribution manifold 136 to receive a temperature source from the frequency conversion modular set 102, while a control end thereof is connected with the controllers (134.1, 134.2, ..., 134.K). Each controller controls the water flow rate of the corresponding floor heating unit, thereby controlling the indoor temperature.

In the air-conditioning system 100 shown in Fig. 1, one of the plurality of frequency conversion modular units (112.1, 112.2, ..., 112.N) is set as a main unit, while the other N-1 frequency conversion modular units are set as slave units (1, 2., ..., N-1). As an example, the frequency conversion modular unit 112.1 is set as a main unit, while the other frequency conversion modular units (112.2, ..., 112.N) are set as slave units (1, ..., N-1). A main controller 118.1 is provided in the main unit 112.1, and controllers (118.2, ..., 118.N) are provided in respective slave units (1, ..., N-1); the main controller 118.1 is in communicative connection with the controllers (118.2, ..., 118.N) in all slave units (1, ..., N-1) such that the main controller 118.1 receives an operating state of the compressor (e.g., a current operating frequency of the compressor) from the controllers (118.2, ..., 118.N) in the slave units (1, ..., N-1), detects signals and transmits a control signal for adjusting the operating state of its compressor (e.g., adjusting the current operating frequency of the compressor) to the controllers (118.2, ..., 118.N) in all slave units (1, ..., N-1).

At a water pipe connected with the main unit 112.1, a water temperature sensor 108 is provided for detecting a current temperature of water entering/exiting the water pipe connected with the main unit 112.1, the current temperature of the water entering/exiting the water pipe connected with the main unit 112.1 being used as a current temperature TW of the water entering/exiting the set in the air-conditioning system 100.

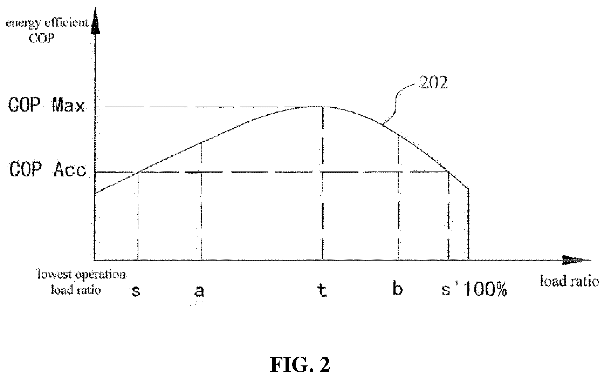

Fig. 2 is an energy efficiency output diagram of each frequency conversion modular unit (112.1, 112.2 , ..., 112.N) in the frequency conversion modular set 102 under different load ratios. As an independent variable, the abscissa of Fig. 2 represents a variation range of the load ratio of each frequency conversion modular unit (ranging from the lowest operating load ratio to 100% load ratio); as a dependent variable, the ordinate of Fig. 2 represents the energy efficiency of each frequency conversion modular unit. As shown in Fig. 2, when each frequency conversion modular unit changes from the region with the lowest operating load ratio to the region with 100% load ratio, the energy efficiency profile forms like an inverse parabola 202; when the load ratio is t, the energy efficiency of each frequency conversion modular unit reaches a maximum value, i.e., COP Max. In an example of the present disclosure, the energy efficiency COP Acc in the ordinate represents an acceptable load point of the energy efficiency for each frequency conversion modular unit. Therefore, along a horizontal extension line of the energy efficiency COP Acc in the ordinate, there are a pair of intersecting points with respect to the inverse parabola 202, and a load range (s, s') is formed on the abscissa corresponding to the pair of intersecting points, i.e., all energy efficiencies within the load range (s, s') are equal to or greater than COP Acc. In an example of the present disclosure, during the load or unload process with respect to the plurality of frequency conversion modular units (112.1, 112.2, ..., 112.N), it is necessary to make their operating energy efficiency fall into the load range (s, s'). An optimized interval (a, b) is provided within the load interval (s, s') so as to cause the plurality of frequency conversion modular units (112.1, 112.2, ..., 112.N) to operate in a more optimized manner within the load interval (s, s'), wherein a denotes a shutdown point of the frequency conversion modular units, and b denotes a start point of the frequency conversion modular units. Setting of the optimized range (a, b) causes each frequency conversion modular unit to operate with an energy efficiency as close as possible to point t.

The abscissa, the ordinate, and the function curve change shown in Fig. 2 show a model of performing frequency load and frequency unload to each frequency conversion modular unit according to the present disclosure. According to the model shown in Fig. 2, the frequency conversion modular set 102 has different set energy efficiencies under different loads; there will be an acme between the low load and the high load; an objective of load/unload of the frequency conversion modular set 102 is to cause the set to operate under the high energy efficiency point or as close as possible to the high energy efficiency point; the frequency conversion modular unit load ratio a is used for shutdown of the module, while the load ratio b is used for starting the module, such that when the load ratio a = (n-1) /n*t, a≥s and a <t-x1, a=s; the load ratio b = t+t/n, b≤s' and b>t + x2, wherein n denotes a total number of modules whose operation is not limited in the frequency conversion modular set 102, t denotes a load ratio when the module is at the highest COP, s denotes a start load ratio, s' denotes a corresponding load ratio having the same COP value as the start load ratio when the load ratio is higher than t, and x1 and x2 are offsets set to prevent frequent start/stop of the module; as an example, x1 and/or x2 may be a value ranging between 0.05~3.

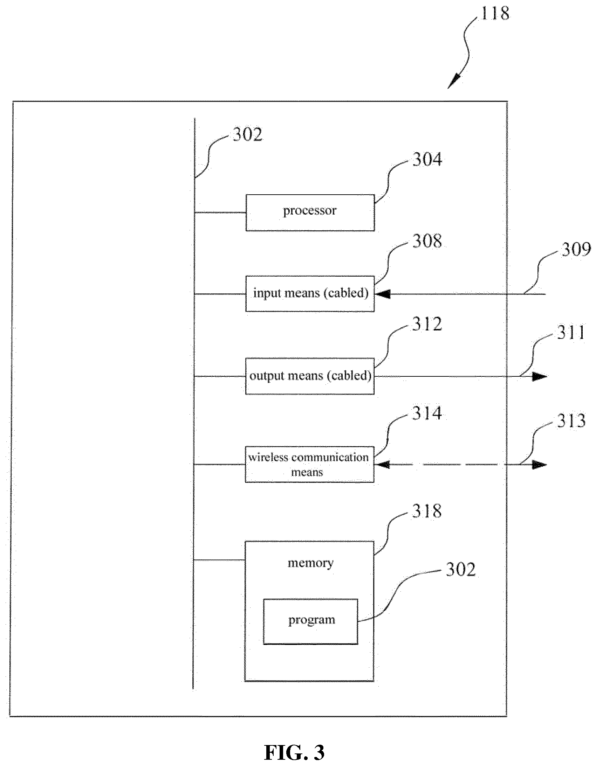

Fig. 3 is a schematic internal structural diagram of the main controller 118 in Fig. 1. As shown in Fig. 3, the main controller 118 comprises a bus 302, a processor 304, input means (cabled) 308, output means (cabled) 312, wireless communication means 314, and a memory 318 having a control program 302. The various components in the main controller 118, including the processor 304, the input means (cabled) 308, the output means (cabled) 312, the wireless communication means 314, and the memory 318, are communicatively connected with the bus 302, enabling the processor 304 to control operations of the input means (cabled) 308, the output means (cabled) 312, the wireless communication means 314, and the memory 318. Specifically, the memory 318 is arranged for storing programs, instructions, and data, while the processor 304 reads programs, instructions, and data from the memory 318 and may write data to the memory 318. By executing the programs and instructions read from the memory 318, the processor 304 controls operations of the input means (cabled) 308, the output means (cabled) 312, and the wireless communication means 314.

Via the connection line 309, the input means (cabled) 308 receives incoming signals and data, including the signals and data emitted from the frequency conversion modular units (112.1, 112.2, ..., 112.N);

Via the connection line 311, the output means (cabled) 312 emits a control signal to outside, including emitting a control signal to the frequency conversion modular units (112.1, 112.2, ..., 112.N);

Via the wireless channel 313, the wireless communication means 314 emits a control signal to outside, including emitting a control signal to the frequency conversion modular units (112.1, 112.2, ..., 112.N); and receives incoming signals and data, including receiving signals and data emitted from the frequency conversion modular units ((112.1, 112.2, ..., 112.N).

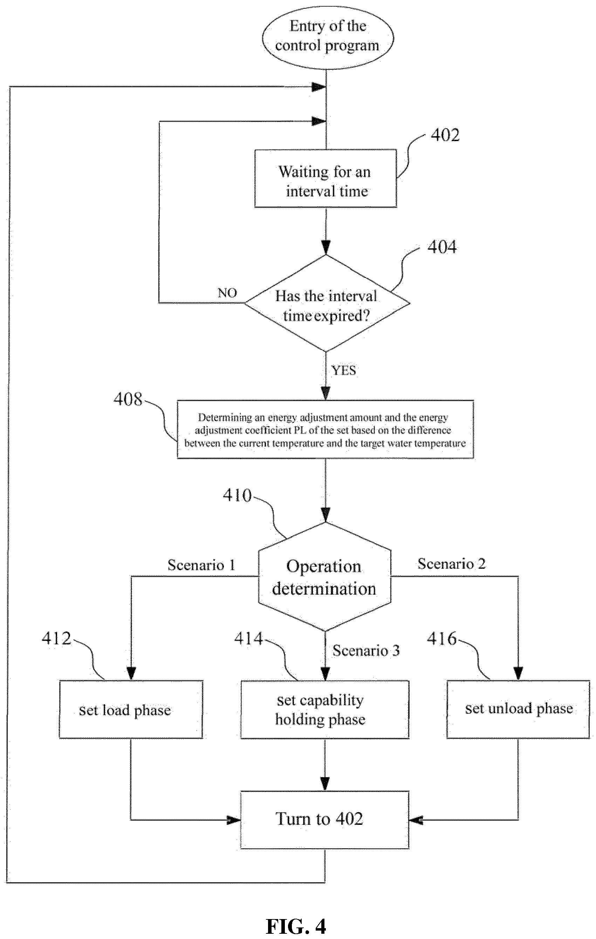

It should be noted that in the embodiments of the present disclosure, the programs that implement the flow charts shown in Figs. 4~12 are stored in the memory 318 of the main controller 118. By executing the program stored in the main controller 118 with the processor 304, the main controller 118 controls the frequency conversion modular units (112.1, 112.2, ..., 112.N). Moreover, in order to adjust the air-conditioning temperature, the memory 318 also stores the target water temperature and the current temperature, wherein the target water temperature is represented by the symbol Tw.target, and the current temperature is represented by the symbol Tw.

Fig. 4 is a control flow chart showing the procedures the main controller 118 controls the frequency conversion modular units (112.1, 112.2, ..., 112.N).

As illustrated in Fig. 4, in step 402, the processor 304 waits for an interval time. In step 404, the processor 304 determines whether the interval time expires. If the interval time has not expired yet, the processor 304 will return operation to step 402; upon expiration of the interval time, the processor 304 make operation jump to step 408.

In step 408, the processor 304 in the main unit 112.2 reads the current temperature Tw and the target water temperature Tw.target stored in the memory 318, and determines an energy adjustment amount of the set based on the difference between the current temperature Tw and the target water temperature Tw.target; and the processor 304 in the main unit 112.2 compares the current temperature detected in the present period with the current temperature detected in the previous period to calculate a rate of change of the controlled water temperature; the rate of change is partitioned into several ranges; within each range, a load amount or unload ratio is subject to different modification with a modification coefficient c, thereby deriving an energy adjustment coefficient PL of the frequency conversion modular set 102, wherein the energy modulation coefficient PL is derived by multiplying the load ratio or unload ratio determined based on the temperature difference between the current temperature Tw and the target water temperature Tw.target by the modification coefficient.

Particularly, the target water temperature Tw.target is a set value inputted to the processor 304, while the current temperature Tw is detected by the water temperature sensor 108. As an example, the target water temperature Tw.target may be ranged between 5~20°C. The water temperature sensor 108 provides the detected current temperature Tw to the processor 304; after receiving the temperature Tw, the processor 304 stores it in the memory 318. The water temperature sensor 108 measures the current temperature Tw of the water in the water pipe by using temperature conduction of water. As an example, the water temperature sensor 108 may be placed in the water to contact with the water, thereby measuring the current temperature Tw of the water in the water pipe.

In an embodiment of the present invention, the energy adjustment amount is represented by a percentage of a adjustment load ratio corresponding to the energy adjustment amount to the total load ratio of the frequency conversion modular set 102; while the energy adjustment amount of each frequency conversion modular unit is represented by a percentage of the adjustment load ratio corresponding to the energy adjustment amount of each frequency conversion modular unit to the total load ratio of the frequency conversion modular units.

In step 410, the processor 304 performs operation determination, and the control procedure turns to corresponding set load phase 412, set unload phase 416, or set capacity holding phase 414, respectively, according to three different scenarios, i.e., scenario 1, scenario 2, or scenario 3.

In the step of operation determination 410, specific processing approaches of the processor 304 are provided below:

(i) when Tw-Tw.target> D in a refrigeration working condition, or when Tw.target-Tw> D in a heating working condition, setting the load operation procedure;
(ii) when $-D \leq Tw-Tw.target \leq D$ in the refrigeration working condition, or when $-D \leq Tw.target-Tw \leq D$ in the heating working condition, setting the hold operation procedure;
(iii) when Tw-Tw.target <-D in the refrigeration working condition, or when Tw.target-Tw <-D in the heating working condition, setting the unload operation procedure;

wherein the value D is set according to an accuracy level of water temperature control; as an example, the value D may be ranged between 1 to 3; and wherein the load ratio of the modular set in a load area is set to a large load ratio, the load ratio/unload of the modular set in a fine-tuning area is set to a small load ratio or a small unload ratio, and the unload ratio of the modular set in the unload area is set to a large unload ratio.

In an embodiment of the present invention, the load ratio or the unload ratio is represented by a percentage of the adjustment load ratio to the total load ratio of the frequency conversion modular set 102; while the load ratio and the unload ratio of each frequency conversion modular unit are represented by a percentage of the adjustment load ratio of the frequency conversion modular unit to the total load ratio of the frequency conversion modular unit.

The function of step 412 is: (1) applying frequency load to the selected (or already operating) frequency conversion modular units in the frequency conversion modular set 102, or (2) starting a unactuated frequency conversion modular unit, and applying frequency load or frequency unload to the selected frequency conversion modular units (including the just started frequency conversion modular unit and the operating frequency conversion modular units), dependent on whether a newly calculated average operating frequency is greater than or smaller than the current operating frequency. If the newly calculated average operating frequency is greater than the current operating frequency, frequency load is applied to the selected frequency conversion modular units in step 412; if the average operating frequency is smaller than the current operating frequency, frequency unload is applied to the selected frequency conversion modular units in step 412.

The function of step 416 is: (1) applying unload to the selected (already operating) frequency conversion modular units in the frequency conversion modular set 102, or (2) unloading an already operating frequency conversion modular unit and applying frequency load or frequency unload to the selected (not including the just unloaded frequency conversion modular unit) operating frequency conversion modular units, dependent on whether the newly calculated average operating frequency is greater than the current operating frequency or lower than the current operating frequency. If the newly calculated average operating frequency is greater than the current operating frequency, the frequency load is applied to the selected frequency conversion modular units load in step 412; if the average operating frequency is smaller than the current operating frequency, frequency unload is applied to the selected frequency conversion modular units in step 412.

The function of step 414 is: transmitting a frequency adjustment command to frequency conversion modular units, whose load ratios are deviated from the average load ratio, among the selected (already operating) frequency conversion modular units in the frequency conversion modular set 102.

Upon end of the step 412, 414 or 416, the processor 304 makes operation jump to step 402. After waiting for a periodic interval time, a next period of adjustment is performed so as to repeat the operations shown in Fig. 4.

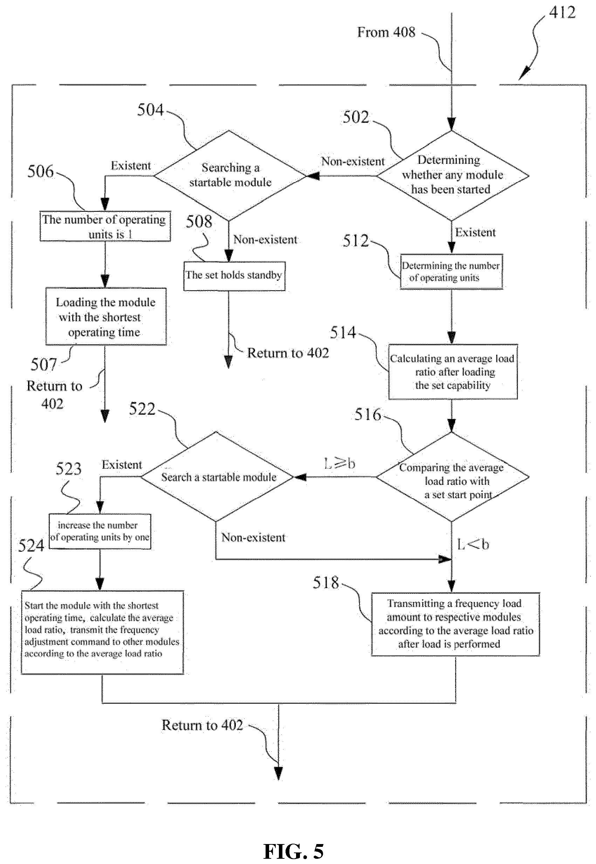

Fig. 5 shows more detailed steps of the set load procedure in step 412.

In step 502, the processor 304 determines whether any frequency conversion modular unit has been started; if none of the frequency conversion modular unit has been started, the processor 304 makes operation jump to step 504; if any frequency conversion modular unit has been started, the processor 304 makes the operation jump to step 512.

In step 512, the processor 304 determines the number of frequency conversion modular units participating in the operation, for calculating average load ratio of each frequency conversion modular unit participating in the operation after load is performed. Afterwards, the processor 304 makes operation jump to step 514.

In step 514, the processor 304 calculates total load ratio of the frequency conversion modular units participating in the operation after load is performed: a sum of the load ratios of respective frequency conversion modular units participating in the operation, plus the energy adjustment amount; then the total load ratio (after load is performed) is divided by the number of frequency conversion modular units participating in the operation, thereby obtaining the average load ratio after load is performed. Afterwards, the processor 304 makes operation jump to step 516.

In step 516, the processor 304 compares the average load ratio after load is performed with the start point of the frequency conversion modular set. If the average load ratio after load is performed≥ the start point of the frequency conversion modular set, the processor 304 will make operation jump to step 522; if the average load ratio after load is performed < the start point of the frequency conversion modular set, the processor 304 will make operation jump to step 518.

In step 516, if the average load ratio after load is performed≥ the start point of the frequency conversion modular unit, the processor 304 will make operation jump to step 522. In step 522, the processor 304 searches a startable frequency conversion modular unit; if the startable frequency conversion modular unit is found, the processor 304 will make operation jump to step 523; if the startable frequency conversion modular unit cannot be found, the processor 304 makes operation jump to step 518.

In step 518, the processor 304 transmits a frequency load amount to respective operating frequency conversion modular units based on the average load ratio after load is performed, said average load ratio is calculated in step 514.

It should be noted that, the procedure will turn to step 518 after completion of the operations of step 516 and step 522; that is to say, step 518 has two entries. When the step 516 jumps to the step 518 and the step 522 jumps to the step 518, the processor 304 obtains that the total load ratio (after load is performed) is the sum of the load ratios of respective frequency conversion modular units participating in the operation, plus the energy adjustment amount; and then the total load ratio is divided by the number of frequency conversion modular units participating in the operation, thereby obtaining the average load ratio after load is performed. After completing the step 518, the processor 304 makes operation return to step 402.

In step 522, the processor 304 searches a startable frequency conversion modular unit. If the startable frequency conversion modular unit is found, the processor 304 makes operation jump to step 523.

In step 523, the processor 304 will increase the number of the operating frequency conversion modular unit by one. Afterwards, the processor 304 makes operation jump to step 524.

In step 524, the processor 304 starts a non-started frequency conversion modular unit with a shortest time of participating in the operation, calculates the total load ratio after load is performed: a sum of load ratios of respective frequency conversion modular units participating in the operation, plus the energy adjustment amount; then, the total load ratio is divided by the number of selected frequency conversion modular units (including the just started frequency conversion modular unit and the operating frequency conversion modular units) to obtain an average load ratio after load is performed. Then, loadunloadbased on the average load ratio after load is performed, the processor 304 applies frequency load or frequency unload to the selected frequency conversion modular units dependent on whether the newly calculated average operating frequency is greater than the current operating frequency or lower than the current operating frequency. If the newly calculated average operating frequency is greater than the current operating frequency, the processor 304 applies frequency load to the selected frequency conversion modular units; if the average operating frequency is lower than the current operating frequency, the processor 304 applies frequency unload to the selected frequency conversion modular units. After the step 524 is completed, the processor 304 makes operation return to step 402.

In step 502, the processor 304 determines if any one of the frequency conversion modular units has been started. If none of the frequency conversion modular units has been started, the processor 304 may make operation jump to step 504.

In step 504, the processor 304 searches a startable frequency conversion modular unit. If the startable frequency conversion modular units can not be found, the processor 304 makes operation jump to step 508; if a startable frequency conversion modular unit is found in step 504, the processor 304 makes operation jump to step 506.

In step 506, the processor 304 records the number of operating frequency conversion modular unit as 1, and then the processor 304 makes operation jump to step 507.

In step 507, the processor 304 loads a start load ratio to the frequency conversion modular unit with the shortest operating time. Afterwards, the processor 304 makes operation return to step 402.

In step 504, the processor 304 searches a startable frequency conversion modular unit; if the processor 304 cannot find a startable frequency conversion modular unit, the processor 304 makes operation turn to step 508.

In step 508, the frequency conversion modular unit keeps standby and makes a determination via an error determination logic, and then the processor 304 makes operation return to step 402.

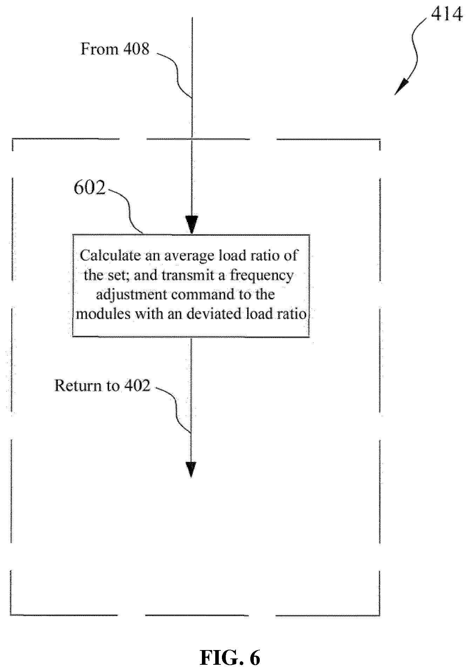

Fig. 6 shows more detailed steps during the set capacity hold procedure in step 414.

In step 602, the processor 304 sums the load ratios of respective frequency conversion modular units participating in the operation to obtain a total load ratio; then, the total load ratio is divided by the number of frequency conversion modular units participating in the operation to obtain an average load ratio. The processor 304 calculates a new average operating frequency based on the average load ratio, compares the newly calculated average operating frequency with the operating frequency of each frequency conversion modular unit participating in the operation, and transmits a frequency adjustment command to those deviated modules. If the newly calculated average operating frequency is greater than the current operating frequency, the processor 304 applies frequency load to the deviated frequency conversion modular unit; if the average operating frequency is lower than the current operating frequency, the processor 304 applies frequency unload to the deviated frequency conversion modular unit. After step 602 is completed, the processor 304 makes operation return to step 402.

It should be noted that the load ratio of each frequency conversion modular unit participating in the operation may be dynamically varied during operating, such that the load ratios of these frequency conversion modular units during the operating are different from each other. The function of step 602 is to optimize the operation of the frequency conversion module set 102, wherein the load ratios of the frequency conversion modular units participating in the operation are adjusted to be consistent so as to compensate for the load ratio deviation generated dynamically during the operating of each frequency conversion modular unit.

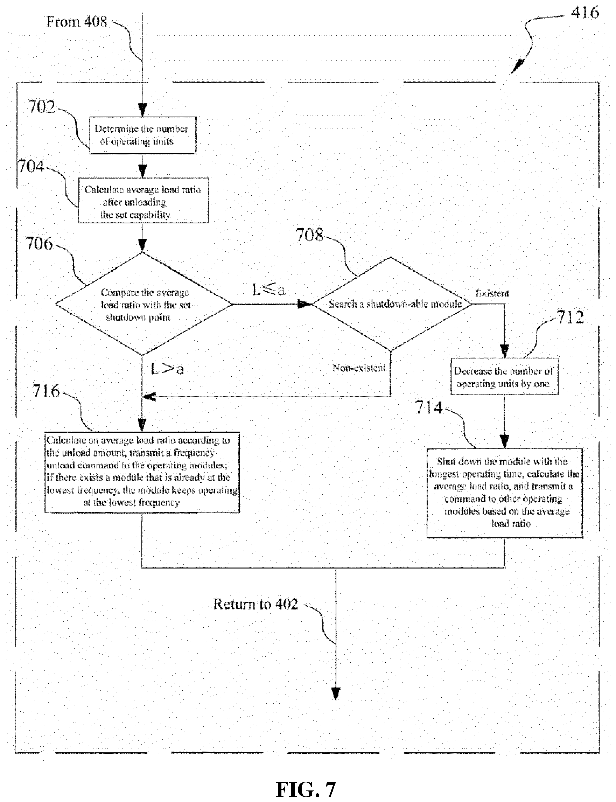

Fig. 7 shows more detailed steps during the set unload procedure in step 416.

In step 702, the processor 304 determines the number of frequency conversion modular units participating in the operation, for calculating an average load ratio of each frequency conversion modular unit participating in the operation after unload is performed. Then, the processor 304 makes operation jump to step 704.

In step 704, the processor 304 calculates a total load ratio of the frequency conversion modular units participating in the operation after unload is performed: summing the load ratios of respective frequency conversion modular units participating in the operation, minus the energy adjustment amount; then the total load ratio is divided by the number of frequency conversion modular units participating in the operation, obtaining an average load ratio after unload is performed. Then, the processor 304 makes operation jump to step 706.

In step 706, the processor compares the average load ratio (after unload is performed) with a shutdown point of the frequency conversion modular set. If the average load ratio after unload is performed≤ the shutdown point of the frequency conversion modular set, the processor 304 makes operation turn to step 708; if the average load ratio after unload is performed> the shutdown point of the frequency conversion modular set, the processor 304 makes operation turn to step 716.

If in step 706, the average load ratio after unload is performed≤ the shutdown point of the frequency conversion modular set, the processor 304 makes operation turn to step 708. In step 708, the processor 304 searches a shutdown-able frequency conversion modular unit. If the shutdown-able frequency conversion modular unit is found, the processor 304 makes operation turn to step 712; if the shutdown-able frequency conversion modular unit is not found, the processor 304 makes operation turn to step 716.

In step 716, the processor 304 transmits the frequency unload amount to respective operating frequency conversion modular units based on the average load ratio (after unload is performed) calculated in step 704. If there exists a frequency conversion modular unit already operating at a lowest frequency among the currently operating frequency conversion modular units, the unit keeps operating at the lowest frequency. After the step 716 is completed, the processor 304 makes operation return to step 402.

It should be noted that, the processor will turn to step 716 upon end of the operations of step 706 and step 708; that is to say, step 716 has two entries. When the step 706 jumps to the step 716 and the step 708 jumps to the step 716, the processor 304 obtains that the total load ratio (after unload is performed) is the sum of the load ratios of respective frequency conversion modular units participating in the operation, minus the energy adjustment amount; and then the total load ratio (after unload is performed) is divided by the number of frequency conversion modular units participating in the operation, thereby obtaining the average load ratio after unload is performed. After completing the step 716, the processor 304 makes operation return to step 402.

In step 708, the processor 304 searches a shutdown-able frequency conversion modular unit. If a shutdown-able frequency conversion modular unit is found, the processor 304 makes operation turn to step 712.

In step 712, the processor 304 decreases the number of operating frequency conversion modular units by 1. Afterwards, the processor 304 makes operation turn to step 714.

In step 714, the processor 304 unloads one already started frequency conversion modular unit with a longest time of participating in the operation, and calculates the total load ratio after unload is performed: summing the load ratios of respective frequency conversion modular units participating in the operation, minus the energy adjustment amount; then, the total load ratio (after unload is performed) is divided by the number of selected frequency conversion modular units (not including the just unloaded frequency conversion modular unit and the non-started frequency conversion modular units) to obtain an average load ratio after unload is performed. Then, the processor 304 applies frequency load or frequency unload to the selected frequency conversion modular units based on the average load ratio, dependent on whether the newly calculated average operating frequency is greater than the current operating frequency or lower than the current operating frequency. If the newly calculated average operating frequency is greater than the current operating frequency, the processor 304 applies frequency load to the selected frequency conversion modular units; if the newly calculated average operating frequency is lower than the current operating frequency, the processor 304 applies frequency unload to the selected frequency conversion modular units. After the step 714 is completed, the processor 304 makes operation return to step 402.

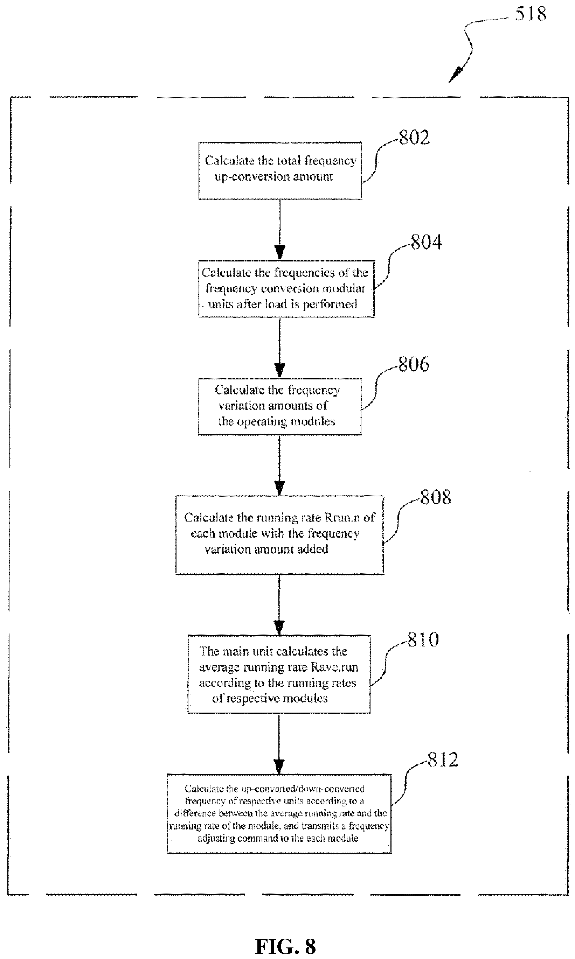

Fig. 8 shows specific steps of transmitting a frequency load amount to each frequency conversion modular unit in step 518.

In step 802, the processor 304 sums the frequencies of loadable frequency conversion modular units in the frequency conversion modular set 102, obtaining a total frequency ΣL of the loadable frequency conversion modular units in the frequency conversion modular set 102. Afterwards, the processor 304 calculates the total frequency up-conversion amount of the frequency conversion modular set 102 by multiplying, based on the energy adjustment coefficient PL calculated in step 408, the total frequency ΣL of the loadable frequency conversion modular units with the energy adjustment coefficient PL. After the step 802 is completed, the processor 304 makes operation turn to step 804.

In step 804, the processor 304 divides the total frequency up-conversion amount of the frequency conversion modular set 102 by the number of selected (already operating) frequency conversion modular units to obtain the frequency of each selected (already operating) frequency conversion modular unit after load is performed. Afterwards, the processor 304 makes operation turn to step 806.

In step 806, the processor 304 subtracts the current operating frequency from the frequency of each selected (already operating) frequency conversion modular unit after load is performed, obtaining the frequency variation amount of the each selected (already operating) frequency conversion modular unit. Then, the processor 304 makes operation turn to step 808.

In step 808, the processor 304 calculates a running rate $R_{run.n}$ of each selected (already operating) frequency conversion modular unit after load is performed. Then, the processor 304 makes operation turn to step 810.

In step 810, the processor 304 sums the running rates of the selected (already operating) frequency conversion modular units, and the sum is divided by the number of selected (already operating) frequency conversion modular units, obtaining an average running rate Rave.run. Then, the processor 304 makes operation turn to step 812.

In step 812, the processor 304 calculates an up-converted/down-converted frequency of each selected (already operating) frequency conversion modular unit according to a difference between the average running rate Rave.run and the running rate of each selected (already operating) frequency conversion modular unit, and transmits a frequency adjusting command to the each selected (already operating) frequency conversion modular unit.

In other words, a final varied frequency of each selected (already operating) frequency conversion modular unit is:

$$\triangle fn = fmaxn \times Rave.run - frun.$$

In this formula, fmaxn denotes a maximum load frequency of each frequency conversion modular unit; Rave.run denotes an average running rate; frun denotes a current operating frequency of the corresponding frequency conversion modular unit.

After the step 812 is completed, the step 518 is completed; and the processor 304 will make operation return to step 402.

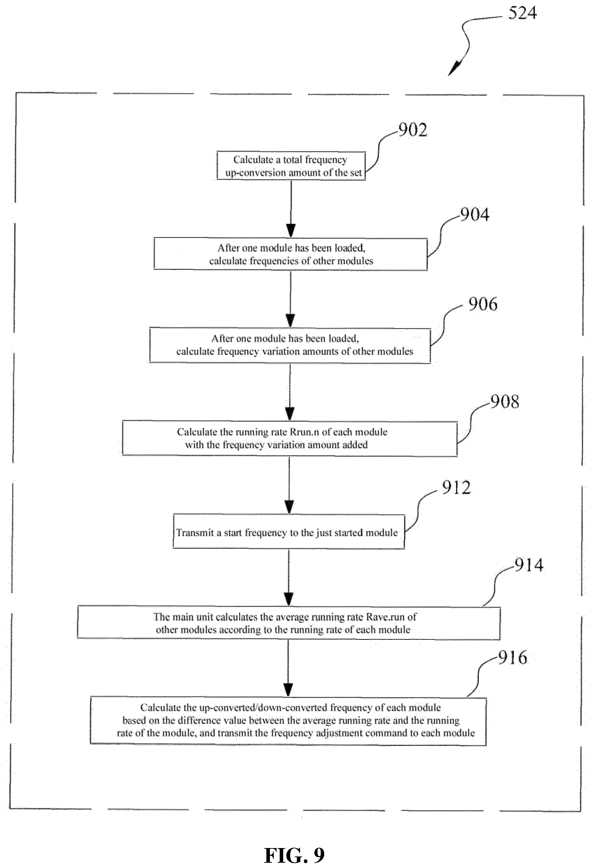

Fig. 9 shows specific steps of transmitting a frequency load/unload amount to each frequency conversion modular unit in step 524.

In step 902, the processor 304 sums the frequencies of loadable frequency conversion modular units in the frequency conversion modular set 102, obtaining the total frequency of the loadable frequency conversion modular units in the frequency conversion modular set 102, where the total frequency of the loadable frequency conversion modular units in the frequency conversion modular set 102 is denoted by a symbol $\Sigma L$. Afterwards, the processor 304 multiplies $\Sigma L$ with PL according to the energy adjustment coefficient PL calculated in step 408 to calculate the total frequency up-conversion amount of the frequency conversion modular set 102. After completing step 902, the processor 304 makes operation turn to step 904.

In step 904, the processor 304 subtracts the frequency of the just started frequency conversion modular unit from the total frequency up-conversion amount of the frequency conversion modular set 102, and divides the result by the number of selected (not including the just started frequency conversion modular unit) already operating frequency conversion modular units, obtaining a frequency of the selected (not including the just started frequency conversion modular unit) already operating frequency conversion modular units after load is performed. Afterwards, the processor 304 makes operation turn to step 906.

In step 906, the processor 304 subtracts the current operating frequency from the frequency of the selected (not including the just started frequency conversion modular units) already operating frequency conversion modular units after load is performed. Afterwards, the processor 304 makes operation turn to step 908.

In step 908, the processor 304 calculates a running rate Rrun.n of each selected (not including the just started frequency conversion modular units) already operating frequency conversion modular unit after load or unload is performed. Afterwards, the processor 304 makes operation turn to step 912.

In step 912, the processor 304 transmits a starting frequency to the just started frequency conversion modular unit. After step 912 is completed, the processor 304 makes operation turn to step 914.

In step 914, the processor sums the running rates of the selected (not including the just started frequency conversion modular units) already operating frequency conversion modular units, and then divides the result by the number of selected (not including the just started frequency conversion modular units) already operating frequency conversion modular units, obtaining an average running rate Rave.run. Afterwards, the processor 304 makes operation turn to step 916.

In step 916, the processor 304 calculates the up-converted/down-converted frequency of each selected (not including the just started frequency conversion modular units) already operating frequency conversion modular unit based on the difference between the average running rate Rave.run and the running rate of each selected (not including the just started frequency conversion modular units) already operating frequency conversion modular unit, and transmits a frequency adjustment command to each selected (not including the just started frequency conversion modular units) frequency conversion modular unit.

In other words, the final varied frequency of each selected (not including the just started frequency conversion modular units) frequency conversion modular unit is $\triangle fn = fmaxn \times Rave.run - frun$.

In this formula, fmaxn indicates a maximum load frequency of each frequency conversion modular unit; Rave.run indicates an average running rate; and frun indicates a current operating frequency of the corresponding frequency conversion modular unit.

After the step 916 is completed, the step 524 is completed, and the processor 304 will make operation return to step 402.

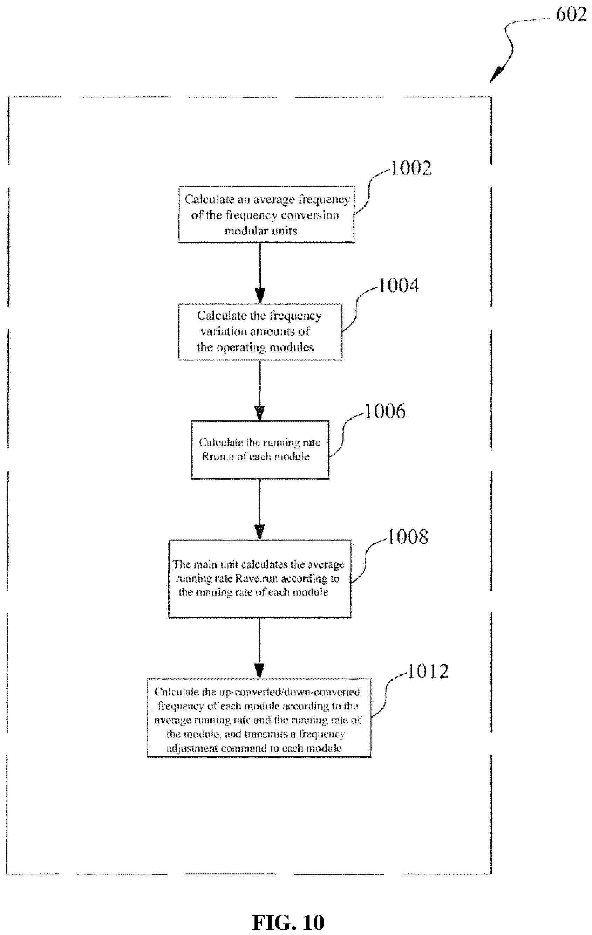

Fig. 10 shows specific steps of transmitting a frequency load/unload amount to each frequency conversion modular unit in step 602.

In step 1002, the processor 304 sums the frequencies of the selected (already operating) frequency conversion modular units in the frequency conversion modular set 102, obtaining the total frequency of the selected (already operating) frequency conversion modular units, and then divides the total frequency of the selected (already operating) frequency conversion modular units by the number of the selected (already operating) frequency conversion modular units to obtain an average frequency of each selected (already operating) frequency conversion modular unit. After the step 1002 is completed, the processor 304 makes operation turn to step 1004.

In step 1004, the processor 304 subtracts the current operating frequency from the average frequency of each selected (already operating) frequency conversion modular unit to obtain a frequency variation amount of each selected (already operating) frequency conversion modular unit. Afterwards, the processor 304 makes operation turn to step 1006.

In step 1006, the processor 304 calculates the running rate $R_{run.n}$ of each selected (already operating) frequency conversion modular unit after load or unload is performed. Afterwards, the processor 304 makes operation turn to step 1008.

In step 1008, the processor 304 sums the running rates of the selected (already operating) frequency conversion modular units, and divides the result by the number of selected (already operating) frequency conversion modular units to obtain an average running rate $R_{ave.run}$. Afterwards, the processor 304 will make operation turn to step 1012.

In step 1012, the processor 304 calculates the up-converting/down-converting frequency of each selected (already operating) frequency conversion modular unit based on the difference between the average running rate $R_{ave.run}$ and the running rate of each selected (already operating) frequency conversion modular unit, and transmits a frequency adjustment command to each selected (already operating) frequency conversion modular unit.

In other words, the final varied frequency of each selected (already operating) frequency conversion modular unit is:

$$\triangle fn = fmaxn \times Rave.run - frun.$$

In this formula, $fmaxn$ indicates the maximum load frequency of each frequency conversion modular unit; $Rave.run$ indicates an average running rate; $frun$ indicates the current operating frequency of the corresponding frequency conversion modular unit.

After the step 1012 is completed, the step 602 is completed, and the processor 304 makes operation return to step 402.

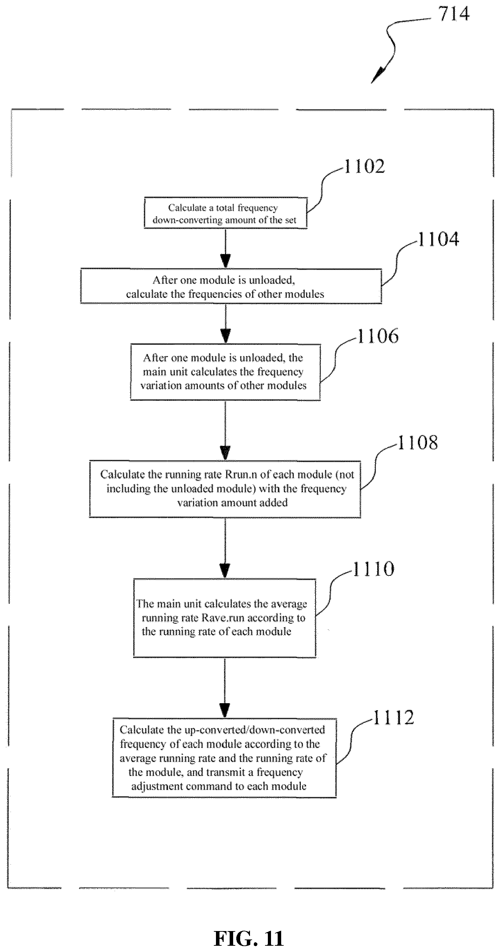

Fig. 11 shows specific steps of transmitting a frequency load/unload amount to each frequency conversion modular unit in step 714.

In step 1102, the processor 304 sums the frequencies of the loadable frequency conversion modular units in the frequency conversion modular set 102, obtaining a total frequency of the loadable frequency conversion mod-

ular set 102, wherein the total frequency of the loadable frequency conversion modular units in the frequency conversion modular set 102 is represented by the symbol $\Sigma L$. Afterwards, the processor 304 multiplies $\Sigma L$ with $PL$ to calculate the total frequency down-conversion amount of the frequency conversion modular set 102 according to the energy adjustment coefficient $PL$ calculated in step 408. After the step 1102 is completed, the processor 304 makes operation turn to step 1104.

In step 1104, the processor 304 subtracts the total frequency down-converting amount from the total frequency down-converting amount of the selected (not including the unloaded frequency conversion modular units) operating frequency conversion modular units, and divides the result by the number of the selected (not including the unloaded frequency conversion modular units) operating frequency conversion modular units, obtaining the frequency of the selected (not including the unloaded frequency conversion modular units) operating frequency conversion modular units after unload is performed. Afterwards, the processor 304 makes operation turn to step 1106.

In step 1106, the processor 304 subtracts the current operating frequency from the frequencies of the selected (not including the unloaded frequency conversion modular units) operating frequency conversion modular units after unload is performed to obtain a frequency variation amount. Afterwards, the processor 304 makes operation turn to step 1108.

In the step 1108, the processor 304 calculates the running rate $R_{run.n}$ of each selected (not including the unloaded frequency conversion modular units) operating frequency conversion modular unit after unload is performed. Afterwards, the processor 304 makes operation turn to step 1110.

In step 1110, the processor sums the running rates of the selected (not including the unloaded frequency conversion modular units) already operating frequency conversion modular units, and divides the result by the number of the selected (not including the unloaded frequency conversion modular units) operating frequency conversion modular units to obtain an average running rate $R_{ave.run}$. Afterwards, the processor 304 makes operation turn to step 1112.

In step 1112, based on a difference between the average running rate $R_{ave.run}$ and the running rate of each selected (not including the unloaded frequency conversion modular units) operating frequency conversion modular unit, the processor 304 calculates the up-converted/down-converted frequency of the rest of (not including the unloaded frequency conversion modular unit) operating frequency conversion modular units, and transmits a frequency adjustment command to each selected (not including the unloaded frequency conversion modular units) operating frequency conversion modular unit.

In other words, the final varied frequency of each selected (not including the unloaded frequency conversion modular units) operating frequency conversion modular unit is:

$$\triangle fn = fmaxn \times Rave.run - frun.$$

In this formula, fmax.n denotes the maximum load frequency of each frequency conversion modular unit; Rave.run indicates an average running rate; and frun indicates the current operating frequency of the corresponding frequency conversion modular unit.

After the step 1112 is completed, the step 714 is completed, and the processor 304 makes operation return to step 402.

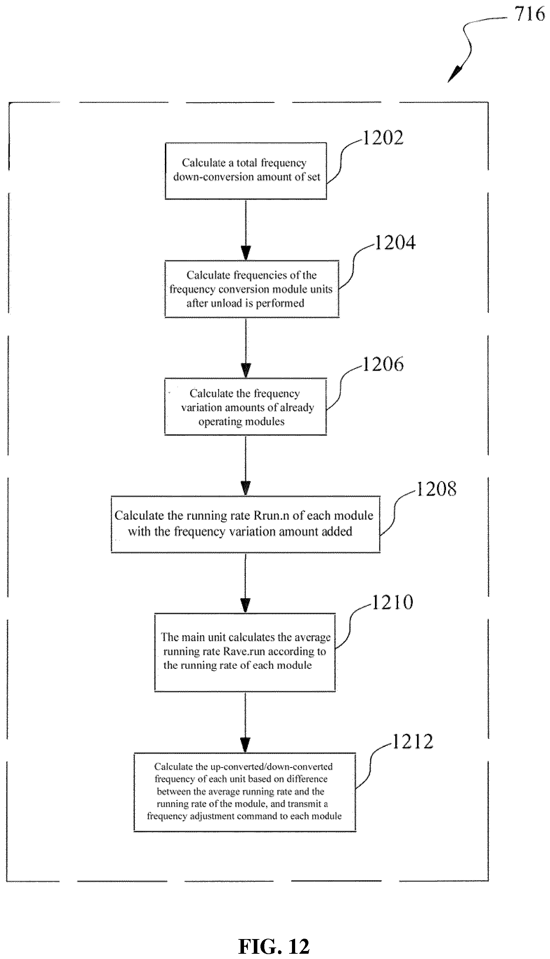

Fig. 12 shows specific steps of transmitting a frequency unload amount to each frequency conversion modular unit in step 716.

In step 1202, the processor 304 sums the frequencies of the loadable frequency conversion modular units in the frequency conversion modular set 102 to obtain the total frequency of the loadable frequency conversion modular units in the frequency conversion modular set 102, wherein the total frequency of the loadable frequency conversion modular units in the frequency conversion modular set 102 is represented by ΣL. Afterwards, the processor 304 multiplies ΣL with PL to calculate the total frequency down-conversion amount of the frequency conversion modular set 102 based on the energy adjustment coefficient PL in step 408. After the step 802 is completed, the processor 304 makes operation turn to step 1204.

In step 1204, the processor 304 divides the total frequency down-conversion amount of the frequency conversion modular set 102 by the number of selected (already operating) frequency conversion modular units to obtain the frequency of each selected (already operating) frequency conversion modular unit after unload is performed. Afterwards, the processor 304 makes operation turn to step 1206.

In step 1206, the processor 304 subtracts the current operating frequency from the frequency of each selected (already operating) frequency conversion modular unit after unload is performed, to obtain the frequency variation amount of each selected (already operating) frequency conversion modular unit. Afterwards, the processor 304 makes operation turn to step 1208.

In step 1208, the processor 304 calculates the running rate Rrun.n of each frequency conversion modular unit after unload is performed. Afterwards, the processor 304 makes operation turn to step 1210.

In step 1210, the processor 304 sums the running rates of the selected (already operating) frequency conversion modular units, and divides the sum by the number of selected (already operating) frequency conversion modular units to obtain an average running rate Rave.run. Afterwards, the processor 304 makes operation turn to step 1212.

In step 1212, the processor 304 calculates the up-converted/down-converted frequency of each selected (already operating) frequency conversion modular unit based on the difference between the average running state Rave.run and the running rate of each selected (already operating) frequency conversion modular unit, and transmits a frequency adjustment command to each selected (already operating) frequency conversion modular unit.

In other words, the final varied frequency of each selected (already operating) frequency conversion modular unit is:

$$\triangle fn = fmaxn \times Rave.run - frun.$$

In this formula, fmax.n denotes a maximum load frequency of each frequency conversion modular unit; Rave.run denotes an average running rate; and frun denotes a current running frequency of the corresponding frequency conversion modular unit.

After step 1212 is completed; the step 716 is completed; and the processor 304 makes operation return to step 402.

**Claims**

1. A method for controlling an air-conditioning system (100), the air-conditioning system comprising a modular set (102) that includes a plurality of frequency conversion modular units (112.1, 112.2, ..., 112.N), wherein one of the plurality of frequency conversion modular units (112.1, 112.2, ..., 112.N) is set as a main frequency conversion modular unit (112.1) having a main controller (118.1) provided thereon, the main controller (118.1) being arranged for controlling operation of the plurality of frequency conversion modular units (112.1, 112.2, ..., 112.N), wherein each of the frequency conversion modular units (112.1, 112.2, ..., 112.N) is in fluid communication with a water pipe (110), the water pipe (110) receiving water for temperature adjustment, the water pipe (110) being provided with a water temperature sensor (108) for detecting a current temperature (Tw) of water, represented by the symbol Tw, in the pipe, and wherein the main controller (118.1) comprises a processor (304) configured to perform steps of:

   - setting an optimized load ratio range for each of the plurality of frequency conversion modular units (112.1, 112.2, ..., 112.N), within the optimized load ratio range, an operating energy efficiency of each of the plurality of frequency conversion modular units (112.1, 112.2, ..., 112.N) is greater than or equal to a predetermined energy efficiency value, wherein the optimized load ratio range (a, b) is within a load range (s, s'), which is equal or greater than an acceptable load point;

- detecting and inputting a target temperature (Tw.target) of water, represented by the symbol Tw.target;
- detecting and inputting the current temperature (Tw) of water;
- obtaining an energy adjustment amount of the module set according to a difference between the target temperature of the water and the current temperature of the water;
- inputting the energy adjustment amount; and
- setting different operations for the modular set (102) according to the energy adjustment amount, said different operations including:

    (1) a load operation;
    (2) an unload operation; or
    (3) an hold operation, wherein

in the load operation, frequency adjustment amounts of the plurality of frequency conversion modular units (112.1, 112.2, ..., 112.N) are determined based on the energy adjustment amount and operating positions within the optimized load ratio range of the respective frequency conversion modular units (112.1, 112.2, ..., 112.N) participating in operating among the plurality of frequency conversion modular units (112.1, 112.2, ..., 112.N), or

in the unload operation, frequency adjustment amounts of the plurality of frequency conversion modular units (112.1, 112.2, ..., 112.N) are determined based on the energy adjustment amount and operating positions within the optimized load ratio range of respective frequency conversion modular units participating in operating among the plurality of frequency conversion modular units (112.1, 112.2, ..., 112.N) or

in the hold operation, each of the operating frequency conversion modular unit is fine-tuned according to an average load ratio of the plurality of frequency conversion modular units (112.1, 112.2, ..., 112.N) and the hold operation causes the plurality of frequency conversion modular units (112.1, 112.2, ..., 112.N) to operate under a further optimization condition in the optimized load ratio range; and

wherein the load operation or the unload operation causes the plurality of frequency conversion modular units (112.1, 112.2, ..., 112.N) to operate within the optimized load ratio range after load or unload is performed.

2. The method according to claim 1,

wherein the optimized load ratio range has a minimum value a of the optimized load ratio range and a maximum value b of the optimized load ratio range, and wherein the load operation comprises steps of:

- based on the energy adjustment amount, calculating an average load ratio of each operating frequency conversion modular unit after load is performed;
- comparing the average load ratio after load is performed with b;

    when the average load ratio after load is performed $\geq$ b,

        (i) searching whether a frequency conversion modular unit (112.1, 112.2, ..., 112.N) not participating in operation exists,
        (ii) if the frequency conversion modular unit not participating in operation exists, starting the frequency conversion modular unit (112.1, 112.2, ..., 112.N) not participating in operation,
        (iii) calculating an average load ratio of just started operating frequency conversion modular unit and the operating frequency conversion modular units,
        (iv) transmitting a frequency adjustment command to the just started operating frequency conversion modular unit and the operating frequency conversion modular units;

    when the average load ratio after load is performed < b, or the average load ratio after load is performed $\geq$ b and the frequency conversion modular unit (112.1, 112.2, ..., 112.N) not participating in operation is not found,

        (i) calculating an average load ratio of the frequency conversion modular units (112.1, 112.2, ..., 112.N) participating in operation,
        (ii) transmitting a frequency adjustment command to the operating frequency conversion modular units; and/or

wherein the optimized load ratio range has a minimum value a of the optimized load ratio range and a maximum value b of the optimized load ratio range, and wherein the load operation comprises steps of:

    - according to the energy adjustment amount, calculating an average load ratio of each operating frequency conversion modular unit after unload is performed;
- comparing the average load ratio after unload is performed with a;

when the average load ratio after unload is performed ≤ a,

(i) searching whether a shutdown-able frequency conversion modular unit exists,
(ii) if the shutdown-able frequency conversion modular unit is found, unloading the found shutdown-able frequency conversion modular unit and causing it to be shutdown,
(iii) calculating an average load ratio of the operating frequency conversion modular units other than the shutdown frequency conversion modular unit,
(iv) transmitting a frequency adjustment command to the operating frequency conversion modular units other than the shutdown frequency conversion modular unit;

when the average load ratio after unload is performed >a, or when the average load ratio after unload is performed ≤a and the shutdown-able frequency conversion modular unit is not found,

(i) calculating an average load ratio of the operating frequency conversion modular units,
(ii) transmitting a frequency adjustment command to the operating frequency conversion modular units.

3. The method according to one of claims 1 to 2,

wherein the unload step comprises unloading a frequency conversion modular unit with the longest operating time; and/or
wherein the step of transmitting a frequency adjustment command to the operating frequency conversion modular unit comprises a step of:
when the operating frequency conversion modular units are already at a lowest frequency, not adjusting the operating frequency conversion modular units, thereby causing the operating frequency conversion modular units to keep operating at the lowest frequency.

4. The method according to claim 2,
wherein the step of transmitting a frequency adjustment command to the just started operating frequency conversion modular unit and the operating frequency conversion modular units comprises steps of:

- calculating a total frequency of loadable frequency conversion modular units of the frequency conversion modular set (102);
- determining an energy adjustment coefficient of the frequency conversion modular set (102) according to the load ratio and a water temperature variation correction coefficient;
- calculating a total frequency up-conversion amount according to the total frequency of the loadable frequency conversion modular unit and the energy adjustment coefficient;
- calculating frequencies of the just started operating frequency conversion modular unit and the operating frequency conversion modular units after load is performed, according to the total frequency up-conversion amount;
- calculating frequency variation amounts according to differences between the frequencies of the just started operating frequency conversion modular unit and the operating frequency conversion modular units after load is performed and a current operating frequency;
- calculating running rates of the operating frequency conversion modular unit after load is performed;
- calculating an average running rate of the operating frequency conversion modular units other than the just started frequency conversion modular unit according to the running rates of the operating frequency conversion modular units after load is performed; and
- calculating an up-converted/down-converted frequency according to a difference value between the average running rate and the running rate of each of the operating frequency conversion modular units other than the just started frequency conversion modular unit, and transmitting the frequency adjustment command to each of the operating frequency conversion modular units other than the just started frequency conversion modular unit.

5. The method according to claim 2,
wherein the step of transmitting a frequency adjustment command to the operating frequency conversion modular units comprises steps of:

- calculating a total frequency of the loadable frequency conversion modular units in the frequency conversion modular set (102);
- determining an energy adjustment coefficient of the frequency converter modular set according to the load ratio and the water temperature change correction coefficient;

- calculating a total frequency up-conversion amount according to the total frequency of the loadable frequency conversion modular units and the energy adjustment coefficient;

- according to the total frequency up-conversion amount, calculating the frequency of the operating frequency conversion modular units after load is performed;

- calculating frequency variation amounts according to difference values between the frequencies of the operating frequency conversion modular units after load is performed and the current operating frequency;

- calculating running rates of the operating frequency conversion modular units after load is performed;

- according to the running rates of the operating frequency conversion modular units after load is performed, calculating an average running rate of the operating frequency conversion modular units after load is performed; and

- calculating an up-converted/down-converted frequency according to a difference value between the average running rate and the running rate of each of the operating frequency conversion modular units after load is performed, and transmitting the frequency adjustment command to each of the operating frequency conversion modular units.

6. The method according to claim 2,
wherein the step of transmitting an adjustment command step to the operating frequency modular units other than the shutdown frequency conversion modular unit comprises steps of:

- calculating a total frequency of the loadable frequency conversion modular units in the frequency conversion modular set (102);

- determining an energy adjustment coefficient of the frequency converter modular set according to the unload ratio and the water temperature change correction coefficient;

- calculating a total frequency down-conversion amount according to the total frequency of the loadable frequency conversion modular units and the energy adjustment coefficient;

- according to the total frequency down-conversion amount, calculating the frequency of the operating frequency conversion modular units other than the unloaded frequency conversion modular unit after unload is performed;

- calculating frequency variation amounts according to difference values between the frequencies of the operating frequency conversion modular units after unload is performed and the current operating frequency;

- calculating running rates of the operating frequency conversion modular units after unload is performed;

- calculating an average running rate of the operating frequency conversion modular units other than the unloaded frequencies according to the running rates of the operating frequency conversion modular units after unload is performed; and

- calculating an up-converted/down-converted frequency according to a difference value between the average running rate and the running rate of each of the operating frequency conversion modular units other than the unloaded frequency conversion modular unit after unload is performed, and transmitting the frequency adjustment command to each of the operating frequency conversion modular units other than the just started frequency conversion modular unit.

7. The method according to claim 2,
wherein the step of transmitting a frequency adjustment command to the operating frequency conversion modular units comprises steps of:

- calculating a total frequency of the loadable frequency conversion modular units in the frequency conversion modular set (102);

- determining an energy adjustment coefficient of the frequency converter modular set according to the load ratio and the water temperature change correction coefficient;

- determining a total frequency down-conversion amount according to the total frequency of the loadable frequency conversion modular units and the energy adjustment coefficient;

- according to the total frequency down-conversion amount, calculating the frequency of the operating frequency conversion modular units after unload is performed;

- calculating frequency variation amounts according to difference values between the frequencies of the operating frequency conversion modular units after unload is performed and the current operating frequency;

- calculating running rates of the operating frequency conversion modular units after unload is performed;

- calculating an average running rate of the operating frequency conversion modular units after unload is performed according to the running rates of the operating frequency conversion modular units after unload is performed; and

- calculating an up-converted/down-converted frequency according to a difference value between the average running rate and the running rate of each of the operating frequency conversion modular units after unload is performed, and transmitting the frequency adjustment command to each of the operating frequency conversion modular units.

8. The method according to one of claims 1 to 7, wherein the step of fine-tuning each of the operating frequency conversion modular units according to an average load ratio of the plurality of frequency conversion modular units (112.1, 112.2, ..., 112.N) comprises steps of:

- calculating a total frequency of the operating frequency conversion modular units;
- calculating an average frequency of the operating frequency conversion modular units according to the total frequency of the operating frequency conversion modular units;
- calculating a frequency variation amount according to a difference between the average frequency of the operating frequency conversion modular units and the current operating frequency;
- calculating running rates of the operating frequency conversion modular units after load/unload is performed;
- calculating an average running rates of the operating frequency conversion modular units after load/unload is performed according to the running rates of the operating frequency conversion modular units load/unload is performed; and
- calculating an up-converted/down-converted frequency according to a difference value between the average running rate and the running rate of each of the operating frequency conversion modular units, and transmitting the frequency adjustment command to each of the operating frequency conversion modular units.

9. The method according to one of claims 1 to 8,

wherein the different operations to the modular set (102) comprises the steps of:

(i) when Tw-Tw.target>D in a refrigeration working condition, or when Tw.target-Tw>D in a heating working condition, setting as a load operation;
(ii) when -D≤Tw-Tw.target≤D in the refrigeration working condition, or when -D≤Tw.target-Tw≤D in the heating working condition, setting as a hold operation;
(iii) when Tw-Tw.target<-D in the refrigeration working condition, or when Tw.target-Tw<-D in the heating working condition, setting as a unload operation;

wherein the value D can be set according to an accuracy level of water temperature control; and wherein the load ratio of the modular set (102) in a load area is set to a large load ratio, the load/unload ratio of the modular set (102) in a fine-tuning area is set to a small load ratio or a small unload ratio, and the unload ratio of the modular set in the unload area is set to a large unload ratio.

10. The method according to one of claims 1 to 9,

wherein the method further comprises steps of:

- determining a minimum value (a) of the optimized load ratio range and a maximum value (b) of the optimized load ratio range;

wherein

$$a = (n-1)/n*t, \ a≥s \ and \ a<t-x1;$$

wherein

$$b = t+t/n, \ b≤s' \ and \ b>t + x2,$$

wherein n denotes a total number of modules whose operation is not limited in the system, t denotes a load ratio when the module is at the highest operation energy efficiency (cop MAX), s denotes a start load ratio, s' denotes a corresponding load ratio having the highest operation energy efficiency (cop MAX) value as the start load ratio when the load ratio is higher than t, and x1 and x2 are deviations set to prevent frequent start/stop of the module.

11. The method according to any one of claims 1 to 10, wherein the modular set (102) is in fluid communication with a plurality of indoor units (124.1, 124.2, ..., 124.N) and a plurality of floor heating units (132.1, 132.2, ..., 132.N) via the water pipe (10).

12. An air-conditioning system, comprising a modular set (102) that includes a plurality of frequency conversion modular units (112.1, 112.2, ..., 112.N), **characterized in that** the air-conditioning system comprises:

- a main controller (118.1), wherein

one of the plurality of frequency conversion modular units (112.1, 112.2, ..., 112.N) is set by means of the main controller (118.1) as a main frequency conversion modular unit (112.1), while the remaining of the plurality of frequency conversion modular units (112.1, 112.2, ..., 112.N) are set by means of the main controller (118.1) as slave frequency conversion modular units (1, 2, ..., N-1);

the main controller (118.1) is connected with the main frequency conversion modular unit (112.1) and also connected with the slave frequency conversion modular units (1, 2, ..., N-1);

each of the frequency conversion modular units (112.1, 112.2, ..., 112.N) is in fluid communication with a water pipe (110), the water pipe (110) receiving water for temperature adjustment and being provided with a water temperature sensor (108) for detecting a current temperature (Tw) of water, represented by the symbol Tw; and

the main controller (118.1) is configured to perform (1) a load operation, (2) a unload operation, or (3) a hold operation to the plurality of frequency conversion modular units (112.1, 112.2, ..., 112.N) according to an energy adjustment amount as inputted according to the method of any one of claims 1 to 11.

13. The air-conditioning system according to claim 12,

wherein the main controller (118.1) is arranged on the main frequency conversion modular unit (112.1); and/or

wherein the modular set (102) is in fluid communication with a plurality of indoor units (124.1, 124.2, ..., 124.N) and a plurality of floor heating units (132.1, 132.2, ..., 132.N).

**Patentansprüche**

1. Verfahren zum Steuern eines Klimatisierungssystems (100), wobei das Klimatisierungssystem einen modularen Satz (102) umfasst, der eine Vielzahl von modularen Frequenzumwandlungseinheiten (112.1, 112.2, ..., 112.N) aufweist, wobei eine der Vielzahl von modularen Frequenzumwandlungseinheiten (112.1, 112.2, ..., 112.N) als modulare Hauptfrequenzumwandlungseinheit (112.1) eingestellt ist, die eine darauf bereitgestellte Hauptsteuerung (118.1) aufweist, die Hauptsteuerung (118.1) zur Steuerung des Betriebs der Vielzahl der modularen Hauptfrequenzumwandlungseinheiten (112.1, 112.2, ..., 112.N) angeordnet ist, wobei jede der modularen Hauptfrequenzumwandlungseinheiten (112.1, 112.2, ..., 112.N) in Fluidkommunikation mit einer Wasserleitung (110) steht, wobei die Wasserleitung (110) Wasser zur Temperatureinstellung empfängt, wobei die Wasserleitung (110) mit einem Wassertemperatursensor (108) zum Feststellen einer aktuellen Temperatur (Tw) von Wasser, dargestellt durch das Symbol Tw, in der Leitung bereitgestellt wird, und wobei die Hauptsteuerung (118.1) eine Prozessoreinheit (304) umfasst, die so konfiguriert ist, dass sie die folgenden Schritte ausführt:

- Einstellen eines optimierten Lastverhältnisbereichs für jede der Vielzahl von modularen Frequenzumwandlungseinheiten (112.1, 112.2, ..., 112.N), wobei innerhalb des optimierten Lastverhältnisbereichs eine Betriebsenergieeffizienz jeder der Vielzahl von modularen Frequenzumwandlungseinheiten (112.1, 112.2, 112.N) größer als oder gleich einem vorbestimmten Energieeffizienzwert ist, wobei der optimierte Lastverhältnisbereich (a, b) innerhalb eines Lastbereichs (s, s') liegt, der gleich oder größer als ein akzeptabler Lastpunkt ist;
- Feststellen und Eingeben einer Zieltemperatur (Tw.target) von Wasser, dargestellt durch das Symbol Tw.target;
- Feststellen und Eingeben der aktuellen Temperatur (Tw) des Wassers;
- Ermitteln einer Menge zur Energieanpassung des Moduls, die nach einem Unterschied zwischen der Zieltemperatur des Wassers und der aktuellen Temperatur des Wassers eingestellt wird;
- Eingeben der Menge der Energieanpassung; und
- Einstellen verschiedener Betriebe für den modularen Satz (102) nach der Menge an Energie, wobei die verschiedenen Betriebe Folgendes einschließen:

(1) einen Lastbetrieb;
(2) einen Entlastungsbetrieb; oder
(3) einen Haltebetrieb, wobei

im Lastbetrieb Frequenzanpassungsmengen der Vielzahl von modularen Frequenzumwandlungseinheiten (112.1, 112.2, ..., 112.N) basierend auf der Energieanpassungsmenge und den Betriebspositionen innerhalb des optimierten Lastverhältnisbereichs der jeweiligen modularen Frequenzumwandlungseinheiten (112.1, 112.2, ..., 112.N), die am Betrieb der Vielzahl von modularen Frequenzumwandlungseinheiten (112.1, 112.2, ..., 112.N) beteiligt sind, bestimmt werden, oder

im Entlastungsbetrieb die Frequenzanpassungsmengen der Vielzahl von modularen Frequenzumwandlungseinheiten (112.1, 112.2, ..., 112.N) basierend auf der Energieanpassungsmenge und den Betriebspositionen innerhalb des optimierten Lastverhältnisbereichs der jeweiligen am Betrieb beteiligten modularen Frequenzumwandlungseinheiten (112.1, 112.2, ..., 112.N) bestimmt werden oder im Haltebetrieb jede der in Betrieb befindlichen modularen Frequenzumwandlungseinheiten nach einem durchschnittlichen Lastverhältnis der Vielzahl von modularen Frequenzumwandlungseinheiten (112.1, 112.2, ..., 112.N) feinabgestimmt wird und der Haltebetrieb bewirkt, dass die Vielzahl von modularen Frequenzumwandlungseinheiten (112.1, 112.2, ..., 112.N) unter einem weiteren Optimierungszustand im optimierten Lastverhältnisbereich arbeitet; und

wobei der Lastbetrieb oder der Entlastungsbetrieb bewirkt, dass die mehreren modularen Frequenzumwandlungseinheiten (112.1, 112.2, ..., 112.N) innerhalb des optimierten Lastverhältnisbereichs arbeiten, nachdem der Last- oder Entlastungsbetrieb ausgeführt wurde.

2. Verfahren nach Anspruch 1,

wobei der optimierte Lastverhältnisbereich einen minimalen Wert a des optimierten Lastverhältnisbereichs und einen maximalen Wert b des optimierten Lastverhältnisbereichs aufweist, und wobei der Lastbetrieb die folgenden Schritte umfasst:

- basierend auf der Menge der Energieanpassung, Berechnen eines durchschnittlichen Lastverhältnisses jeder in Betrieb befindlichen modularen Frequenzumwandlungseinheit, nachdem die Last ausgeführt wurde;
- Vergleichen des durchschnittlichen Lastverhältnisses nach dem Ausführen der Last mit b;

wenn das durchschnittliche Lastverhältnis nach der Last ausgeführt wird $\geq$ b,

(i) Suchen, ob eine modulare Frequenzumwandlungseinheit (112.1, 112.2, ..., 112.N) vorhanden ist, die nicht am Betrieb teilnimmt,
(ii) wenn die modulare Frequenzumwandlungseinheit nicht am Betrieb teilnimmt, Starten der nicht am Betrieb teilnehmenden modularen Frequenzumwandlungseinheit (112.1, 112.2, ..., 112.N),
(iii) Berechnen eines durchschnittlichen Lastverhältnisses der gerade in Betrieb genommenen modularen Frequenzumwandlungseinheit und der in Betrieb befindlichen modularen Frequenzumwandlungseinheiten,
(iv) Senden eines Frequenzanpassungsbefehls an die gerade in Betrieb genommene modulare Frequenzumwandlungseinheit und die in Betrieb befindlichen modularen Frequenzumwandlungseinheiten;

wenn das durchschnittliche Lastverhältnis nach dem Ausführen der Last < b oder das durchschnittliche Lastverhältnis nach dem Ausführen der Last $\geq$ b ist und die modulare Frequenzumwandlungseinheit (112.1, 112.2, ..., 112.N) nicht am Betrieb teilnimmt, nicht gefunden wird,

(i) Berechnen eines durchschnittlichen Lastverhältnisses der am Betrieb beteiligten modularen Frequenzumwandlungseinheiten (112.1, 112.2, ..., 112.N),
(ii) Senden eines Frequenzanpassungsbefehls an die betriebsmäßigen modularen Frequenzumwandlungseinheiten; und/oder

wobei der optimierte Lastverhältnisbereich einen minimalen Wert a des optimierten Lastverhältnisbereichs und einen maximalen Wert b des optimierten Lastverhältnisbereichs aufweist, und wobei der Lastbetrieb die folgenden Schritte umfasst:

- nach der Menge der Energieanpassung, Berechnen eines durchschnittlichen Lastverhältnisses jeder in Betrieb befindlichen modularen Frequenzumwandlungseinheit, nachdem die Entladung ausgeführt wurde;
- Vergleichen des durchschnittlichen Lastverhältnisses nach dem Ausführen der Entladung mit a;

wenn das durchschnittliche Lastverhältnis nach dem Entladen ausgeführt wird $\leq$ a,

(i) Suchen, ob eine abschaltbare modulare Frequenzumwandlungseinheit vorhanden ist,
(ii) wenn die abschaltbare modulare Frequenzumwandlungseinheit gefunden wird, Entladen der gefundenen abschaltbaren modularen Frequenzumwandlungseinheit und Abschalten derselben,

(iii) Berechnen eines durchschnittlichen Lastverhältnisses der in Betrieb befindlichen modularen Frequenzumwandlungseinheiten mit Ausnahme der abgeschalteten modularen Frequenzumwandlungseinheit,

(iv) Senden eines Frequenzanpassungsbefehls an die betriebsmäßigen modularen Frequenzumwandlungseinheiten, die nicht die abgeschaltete modulare Frequenzumwandlungseinheit sind;

wenn das durchschnittliche Lastverhältnis nach dem Entladen >a ausgeführt wird oder wenn das durchschnittliche Lastverhältnis nach dem Entladen ≤a ausgeführt wird und die abschaltbare modulare Frequenzumwandlungseinheit nicht gefunden wird,

(i) Berechnen eines durchschnittlichen Lastverhältnisses der in Betrieb befindlichen modularen Frequenzumwandlungseinheiten,
(ii) Senden eines Frequenzanpassungsbefehls an die betriebsmäßigen modularen Frequenzumwandlungseinheiten.

3. Verfahren nach einem der Ansprüche 1 bis 2,

wobei der Entladeschritt das Entladen einer modularen Frequenzumwandlungseinheit mit der längsten betriebsmäßigen Zeit umfasst; und/oder
wobei der Schritt des Sendens eines Frequenzanpassungsbefehls an die modulare Betriebsfrequenzumwandlungseinheit den folgenden Schritt umfasst: wenn die modularen Betriebsfrequenzumwandlungseinheiten bereits auf einer niedrigsten Frequenz sind, die modularen Betriebsfrequenzumwandlungseinheiten nicht anzupassen, wodurch die modularen Betriebsfrequenzumwandlungseinheiten veranlasst werden, weiterhin auf der niedrigsten Frequenz zu arbeiten.

4. Verfahren nach Anspruch 2,
wobei der Schritt des Sendens eines Frequenzanpassungsbefehls an die gerade in Betrieb genommene modulare Frequenzumwandlungseinheit und die in Betrieb befindlichen modularen Frequenzumwandlungseinheiten folgende Schritte umfasst:

- Berechnen einer Gesamtfrequenz von ladbaren modularen Frequenzumwandlungsein-

ten des modularen Frequenzumwandlungssatzes (102);
- Bestimmen eines Energieanpassungskoeffizienten des modularen Frequenzumwandlungssatzes (102) nach dem Lastverhältnis und eines Korrekturkoeffizienten für die Variation der Wassertemperatur;
- Berechnen einer Gesamtmenge für die Frequenzumwandlung nach der Gesamtfrequenz der modularen Frequenzumwandlungseinheit und dem Energieanpassungskoeffizienten;
- Berechnen der Frequenzen der gerade in Betrieb genommenen modularen Frequenzumwandlungseinheit und der modularen Frequenzumwandlungseinheiten nach dem Ausführen des Lastbetriebs, nach der Gesamtmenge der Frequenzumwandlung;
- Berechnen der Mengen an Variationen der Frequenzen nach den Unterschieden zwischen den Frequenzen der modularen Frequenzumwandlungseinheit, die gerade in Betrieb genommen wurde, und den modularen Frequenzumwandlungseinheiten, die in Betrieb sind, nachdem der Lastbetrieb ausgeführt wurde, und einer aktuellen Betriebsfrequenz;
- Berechnen der Raten der in Betrieb befindlichen modularen Frequenzumwandlungseinheit nach dem Ausführen der Last;
- Berechnen einer durchschnittlichen Laufrate der in Betrieb befindlichen modularen Frequenzumwandlungseinheiten, die nicht die gerade gestartete modulare Frequenzumwandlungseinheit sind, nach den Laufraten der in Betrieb befindlichen modularen Frequenzumwandlungseinheiten, nachdem die Last ausgeführt wurde; und
- Berechnen einer aufwärts/abwärts gewandelten Frequenz nach einem Durchschnittswert zwischen der durchschnittlichen laufenden Rate und der laufenden Rate jeder der modularen Betriebsfrequenzumwandlungseinheiten, die nicht die gerade gestartete modulare Frequenzumwandlungseinheit ist, und Senden des Frequenzeinstellbefehls an jede der modularen Betriebsfrequenzumwandlungseinheiten, die nicht die gerade gestartete modulare Frequenzumwandlungseinheit ist.

5. Verfahren nach Anspruch 2,
wobei der Schritt des Sendens eines Frequenzanpassungsbefehls an die betriebsmäßigen modularen Frequenzumwandlungseinheiten die folgenden Schritte umfasst:

- Berechnen einer Gesamtfrequenz der ladbaren modularen Frequenzumwandlungseinheiten im modularen Frequenzumwandlungssatz (102);

- Bestimmen eines Energieanpassungskoeffizienten des modularen Satzes des Frequenzrichters nach dem Lastverhältnis und dem Korrekturkoeffizienten der Wassertemperaturänderung;

- Berechnen einer Gesamtmenge für die Frequenzumwandlung nach der Gesamtfrequenz der modularen Frequenzumwandlungseinheiten und dem Energieanpassungskoeffizienten;

- nach der gesamten Menge der Frequenzumwandlung, Berechnen der Frequenz der modularen Frequenzumwandlungseinheiten im Betrieb nach dem Ausführen der Last;

- Berechnen der Mengen an Variationen der Frequenzen nach den Unterschieden zwischen den Frequenzen der modularen Frequenzumwandlungseinheiten im Betrieb, nachdem der Lastbetrieb ausgeführt wurde, und der aktuellen Betriebsfrequenz;

- Berechnen der Raten der in Betrieb befindlichen modularen Frequenzumwandlungseinheiten nach dem Ausführen der Last;

- nach den Laufraten der betriebsmäßigen modularen Frequenzumwandlungseinheiten nach dem Ausführen der Last, Berechnen einer durchschnittlichen Laufrate der betriebsmäßigen modularen Frequenzumwandlungseinheiten nach dem Ausführen der Last; und

- Berechnen einer aufwärts/abwärts gewandelten Frequenz nach einem Durchschnittswert zwischen der durchschnittlichen Laufrate und der Laufrate jeder der modularen Betriebsfrequenzumwandlungseinheiten, nachdem die Mittelung ausgeführt wurde, und Senden des Frequenzeinstellbefehls an jede der modularen Betriebsfrequenzumwandlungseinheiten.

6. Verfahren nach Anspruch 2,
wobei der Schritt des Sendens eines Einstellbefehls an die betriebsmäßigen modularen Frequenzumwandlungseinheiten, die nicht die abgeschaltete modulare Frequenzumwandlungseinheit sind, die folgenden Schritte umfasst:

- Berechnen einer Gesamtfrequenz der ladbaren modularen Frequenzumwandlungseinheiten im modularen Frequenzumwandlungssatz (102);

- Bestimmen eines Energieanpassungskoeffizienten des modularen Satzes des Frequenzrichters nach dem Entlastungsverhältnis und dem Korrekturkoeffizienten der Wassertemperaturänderung;

- Berechnen einer Gesamtmenge der Frequenzabwärtsumwandlung nach der Gesamtfrequenz der ladbaren modularen Frequenzumwandlungseinheiten und dem Energieanpassungskoeffizienten;

- nach der gesamten Menge der Frequenzabwärtsumwandlung, Berechnen der Frequenz der in Betrieb befindlichen modularen Frequenzumwandlungseinheiten, die nicht die unbelastete modulare Frequenzumwandlungseinheit sind, nachdem die Entlastung ausgeführt wurde;

- Berechnen der Mengen an Variationen der Frequenzen nach den Unterschieden zwischen den Frequenzen der modularen Frequenzumwandlungseinheiten im Betrieb, nachdem die Entladung ausgeführt wurde, und der aktuellen Betriebsfrequenz;

- Berechnen der Laufraten der betriebsmäßigen modularen Frequenzumwandlungseinheiten, nachdem die Entladung ausgeführt wurde;

- Berechnen einer durchschnittlichen Laufrate der modularen Frequenzumwandlungseinheiten im Betrieb, die von den unbelasteten Frequenzen unterschiedlich sind, nach den Laufraten der modularen Frequenzumwandlungseinheiten im Betrieb, nachdem die Entlastung ausgeführt wurde; und

- Berechnen einer aufwärts/abwärts gewandelten Frequenz nach einem Durchschnittswert zwischen der durchschnittlichen Laufrate und der Laufrate jeder der modularen Betriebsfrequenzumwandlungseinheiten mit Ausnahme der entladenen modularen Frequenzumwandlungseinheit, nachdem die Entladung ausgeführt wurde, und Senden des Frequenzanpassungsbefehls an jede der modularen Betriebsfrequenzumwandlungseinheiten mit Ausnahme der gerade gestarteten modularen Frequenzumwandlungseinheit.

7. Verfahren nach Anspruch 2,
wobei der Schritt des Sendens eines Frequenzanpassungsbefehls an die betriebsmäßigen modularen Frequenzumwandlungseinheiten die folgenden Schritte umfasst:

- Berechnen einer Gesamtfrequenz der ladbaren modularen Frequenzumwandlungseinheiten im modularen Frequenzumwandlungssatz (102);

- Bestimmen eines Energieanpassungskoeffizienten des modularen Satzes des Frequenzrichters nach dem Lastverhältnis und dem Korrekturkoeffizienten der Wassertemperaturänderung;

- Bestimmen einer Gesamtmenge der Frequenzabwärtsumwandlung nach der Gesamtfrequenz der ladbaren modularen Frequenzumwandlungseinheiten und dem Energieanpassungskoeffizienten;

- nach der gesamten Menge der Frequenzabwärtsumwandlung, Berechnen der Frequenz der in Betrieb befindlichen modularen Frequenzumwandlungseinheiten, nachdem die Entladung ausgeführt wurde;

- Berechnen der Mengen an Variationen der Frequenzen nach den Unterschieden zwischen den Frequenzen der modularen Frequenzumwandlungseinheiten im Betrieb, nachdem die Entladung ausgeführt wurde, und der aktuellen Betriebsfrequenz;

- Berechnen der Laufraten der betriebsmäßigen modularen Frequenzumwandlungseinheiten, nachdem die Entladung ausgeführt wurde;

- Berechnen einer durchschnittlichen Laufrate der modularen Betriebsfrequenzumwandlungseinheiten nach dem Ausführen der Entladung nach den Laufraten der modularen Betriebsfrequenzumwandlungseinheiten nach dem Ausführen der Entladung; und

- Berechnen einer aufwärts/abwärts gewandelten Frequenz nach einem Unterschiedswert zwischen der durchschnittlichen Laufrate und der Laufrate jeder der modularen Betriebsfrequenzumwandlungseinheiten, nachdem die Entladung ausgeführt wurde, und Senden des Frequenzeinstellbefehls an jede der modularen Betriebsfrequenzumwandlungseinheiten.

**8.** Verfahren nach einem der Ansprüche 1 bis 7, wobei der Schritt der Feinabstimmung jeder der modularen Frequenzumwandlungseinheiten im Betrieb nach einem durchschnittlichen Lastverhältnis der Vielzahl von modularen Frequenzumwandlungseinheiten (112.1, 112.2, ..., 112.N) die folgenden Schritte umfasst:

- Berechnen einer Gesamtfrequenz der modularen Frequenzumwandlungseinheiten im Betrieb;

- Berechnen einer durchschnittlichen Frequenz der modularen Frequenzumwandlungseinheiten im Betrieb nach der Gesamtfrequenz der modularen Frequenzumwandlungseinheiten im Betrieb;

- Berechnen einer Menge von Frequenzvariationen nach einem Unterschied zwischen der durchschnittlichen Frequenz der modularen Frequenzumwandlungseinheiten im Betrieb und der aktuellen Betriebsfrequenz;

- Berechnen der Laufraten der in Betrieb befindlichen modularen Frequenzumwandlungseinheiten, nachdem der Last-/Entlastungsvorgang ausgeführt wurde;

- Berechnen einer durchschnittlichen Laufrate der modularen Frequenzumwandlungseinheiten nach dem Ausführen der Last/Entlastung nach den Laufraten der modularen Frequenzumwandlungseinheiten der Last/Entlastung; und

- Berechnen einer aufwärts/abwärts gewandelten Frequenz nach einem Durchschnittswert zwischen der durchschnittlichen Laufrate und der Laufrate jeder der modularen Betriebsfrequenzumwandlungseinheiten, und Senden des Frequenzeinstellbefehls an jede der modularen Betriebsfrequenzumwandlungseinheiten.

**9.** Verfahren nach einem der Ansprüche 1 bis 8,

wobei die unterschiedlichen Betriebe zu dem modularen Satz (102) die folgenden Schritte umfassen:

(i) Tw-Tw.target>D in einem Kühlarbeitszustand, oder wenn Tw.target-Tw>D in einem Heizarbeitszustand, Einstellen als Lastbetrieb;
(ii) wenn -D$\leq$Tw.target$\leq$D im Kühlarbeitszustand, oder wenn - D$\leq$Tw.target-Tw$\leq$D im Heizarbeitszustand, Einstellen als Haltebetrieb;
(iii) wenn Tw-Tw.target<-D im Kühlarbeitszustand, oder wenn Tw.target-Tw<-D im Heizarbeitszustand, Einstellen als Entlastungsbetrieb;

wobei der Wert D nach einem Genauigkeitsgrad der Wassertemperaturregelung eingestellt werden kann; und
wobei das Lastverhältnis des modularen Satzes (102) in einem Lastbereich auf ein großes Lastverhältnis eingestellt ist, das Last-/Entlastungsverhältnis des modularen Satzes (102) in einem Feinabstimmungsbereich auf ein kleines Lastverhältnis oder ein kleines Entlastungsverhältnis eingestellt ist und das Entlastungsverhältnis des modularen Satzes in dem Entlastungsbereich auf ein großes Entlastungsverhältnis eingestellt ist.

**10.** Verfahren nach einem der Ansprüche 1 bis 9,

wobei das Verfahren ferner die folgenden Schritte umfasst:

- Bestimmen eines Minimalwertes (a) des optimierten Lastverhältnisbereiches und eines maximalen Wertes (b) des optimierten Lastverhältnisbereiches;

wobei

$$a = (n-1)/n*t, \; a \geq s \; \text{und} \; a < t-x1;$$

wobei

$$b = t+t/n, \ b \leq s' \ und \ b > t + x2,$$

wobei n eine Gesamtzahl von Modulen bezeichnet, deren Betrieb im System nicht begrenzt ist, t ein Lastverhältnis bezeichnet, wenn das Modul die höchste betriebsmäßige Energieeffizienz (cop MAX) aufweist, s ein Startlastverhältnis bezeichnet, s' ein entsprechendes Lastverhältnis bezeichnet, das den höchsten betriebsmäßigen Energieeffizienzwert (cop MAX) als Startlastverhältnis aufweist, wenn das Lastverhältnis höher als t ist, und x1 und x2 Abweichungen sind, die eingestellt sind, um ein häufiges Starten/Stoppen des Moduls zu verhindern.

11. Verfahren nach einem der Ansprüche 1 bis 10, wobei der modulare Satz (102) über die Wasserleitung (10) in Fluidkommunikation mit einer Vielzahl von Inneneinheiten (124.1, 124.2, ..., 124.N) und einer Vielzahl von Fußbodenheizungseinheiten (132.1, 132.2, ..., 132.N) steht.

12. Klimatisierungssystem, das einen modularen Satz (102) umfasst, der eine Vielzahl von modularen Frequenzumwandlungseinheiten (112.1, 112.2, ..., 112.N) einschließt, **dadurch gekennzeichnet, dass** das Klimatisierungssystem Folgendes umfasst:

- eine Hauptsteuerung (118.1), wobei

eine aus der Vielzahl der modularen Frequenzumwandlungseinheiten (112.1, 112.2, ..., 112.N) mittels der Hauptsteuerung (118.1) als modulare Hauptfrequenzumwandlungseinheit (112.1) eingestellt wird, während die übrigen aus der Vielzahl der modularen Frequenzumwandlungseinheiten (112.1, 112.2, ..., 112.N) mittels der Hauptsteuerung (118.1) als modulare Nebenfrequenzumwandlungseinheiten (1, 2, ..., N-1) eingestellt werden;
die Hauptsteuerung (118.1) mit der modularen Hauptfrequenzumwandlungseinheit (112.1) verbunden ist und auch mit den modularen Nebenfrequenzumwandlungseinheiten (1, 2, ..., N-1) verbunden ist;
jede der modularen Frequenzumwandlungseinheiten (112.1, 112.2, ..., 112.N) in Fluidkommunikation mit einer Wasserleitung (110) steht, wobei die Wasserleitung (110) Wasser zur Temperatureinstellung empfängt und mit einem Wassertemperatursensor (108) zum Feststellen einer aktuellen Temperatur (Tw) des Wassers, dargestellt durch das Symbol Tw, bereitgestellt wird; und die Hauptsteuerung (118.1) so konfiguriert ist, dass sie (1) einen Lastbetrieb, (2) einen Entlastungsbetrieb oder (3) einen Haltebetrieb für die Vielzahl von modularen Frequenzumwandlungseinheiten (112.1, 112.2, ..., 112.N) nach einer Energieeinstellmenge ausführt, die nach dem Verfahren nach einem der Ansprüche 1 bis 11 eingegeben wird.

13. Klimatisierungssystem nach Anspruch 12, wobei die Hauptsteuerung (118.1) auf der modularen Hauptfrequenzumwandlungseinheit (112.1) angeordnet ist; und/oder wobei der modulare Satz (102) in Fluidkommunikation mit einer Vielzahl von Inneneinheiten (124.1, 124.2, ..., 124.N) und einer Vielzahl von Fußbodenheizungseinheiten (132.1, 132.2, ..., 132.N) steht.

**Revendications**

1. Procédé de commande d'un système de climatisation (100), le système de climatisation comprenant un ensemble modulaire (102) qui comporte une pluralité d'unités modulaires de conversion de fréquence (112.1, 112.2, ..., 112.N), dans lequel l'une de la pluralité d'unités modulaires de conversion de fréquence (112.1, 112.2, ..., 112.N) est réglée comme une unité modulaire de conversion de fréquence principale (112.1) ayant un dispositif de commande principal (118.1) prévu sur celle-ci, le dispositif de commande principal (118.1) étant agencé pour commander le fonctionnement de la pluralité d'unités modulaires de conversion de fréquence (112.1, 112.2, ..., 112.N), dans lequel chacune des unités modulaires de conversion de fréquence (112.1, 112.2, ..., 112.N) est en communication fluidique avec une conduite d'eau (110), la conduite d'eau (110) recevant de l'eau pour le réglage de la température, la conduite d'eau (110) étant pourvue d'un capteur de température d'eau (108) pour détecter une température actuelle (Tw) de l'eau, représentée par le symbole Tw, dans la conduite, et dans lequel le dispositif de commande principal (118.1) comprend un processeur (304) conçu pour effectuer les étapes :

- de réglage d'une plage de rapport de charge optimisé pour chacune de la pluralité d'unités modulaires de conversion de fréquence (112.1, 112.2, ..., 112.N), dans la plage de rapport de charge optimisé, un rendement énergétique de fonctionnement de chacune de la pluralité d'unités modulaires de conversion de fréquence (112.1, 112.2, ..., 112.N) est supérieur ou égal à une valeur de rendement d'énergie prédéterminée, dans lequel la plage de rapport de charge optimisé (a, b) se situe dans une plage de charge (s, s'), qui est égale ou supérieure à un point de charge acceptable ;

- de détection et de saisie d'une température cible (Tw.target) de l'eau, représentée par le symbole Tw.target ;
- de détection et de saisie de la température actuelle (Tw) de l'eau ;
- d'obtention d'une quantité d'ajustement d'énergie du module réglé selon une différence entre la température cible de l'eau et la température actuelle de l'eau ;
- de saisie de la quantité d'ajustement d'énergie ; et
- de réglage de différentes opérations pour l'ensemble modulaire (102) selon la quantité d'ajustement d'énergie, lesdites différentes opérations comprenant :

    (1) une opération de charge ;
    (2) une opération de décharge ; ou
    (3) une opération de maintien, dans lequel

dans l'opération de charge, des quantités d'ajustement de fréquence de la pluralité d'unités modulaires de conversion de fréquence (112.1, 112.2, ..., 112.N) sont déterminées sur la base de la quantité d'ajustement d'énergie et des positions de fonctionnement dans la plage de rapport de charge optimisée des unités modulaires de conversion de fréquence respectives (112.1, 112.2, ..., 112.N) participant au fonctionnement parmi la pluralité d'unités modulaires de conversion de fréquence (112.1, 112.2, ..., 112.N), ou

dans l'opération de décharge, des quantités d'ajustement de fréquence de la pluralité d'unités modulaires de conversion de fréquence (112.1, 112.2, ..., 112.N) sont déterminées sur la base de la quantité d'ajustement d'énergie et de positions de fonctionnement dans la plage de rapport de charge optimisée d'unités modulaires de conversion de fréquence respectives participant au fonctionnement parmi la pluralité d'unités modulaires de conversion de fréquence (112.1, 112.2, ..., 112.N) ou

dans l'opération de maintien, chacune des unités modulaires de conversion de fréquence de fonctionnement est réglée avec précision selon un rapport de charge moyen de la pluralité d'unités modulaires de conversion de fréquence (112.1, 112.2, ..., 112.N) et l'opération de maintien amène la pluralité d'unités modulaires de conversion de fréquence (112.1, 112.2, ..., 112.N) à fonctionner sous une autre condition d'optimisation dans la plage de rapport de charge optimisé ; et

dans lequel l'opération de charge ou l'opération de décharge amène la pluralité d'unités modulaires de conversion de fréquence (112.1, 112.2, ..., 112.N) à fonctionner dans la plage de rapport de charge optimisé après que la charge ou la décharge est effectuée.

2.   Procédé selon la revendication 1,

    dans lequel la plage de rapport de charge optimisé a une valeur minimale a de la plage de rapport de charge optimisé et une valeur maximale b de la plage de rapport de charge optimisé, et dans lequel l'opération de charge comprend les étapes :

        - sur la base de la quantité d'ajustement d'énergie, de calcul d'un rapport de charge moyen de chaque unité modulaire de conversion de fréquence de fonctionnement après que la charge est effectuée ;
        - de comparaison du rapport de charge moyen après que la charge est effectuée avec b ;

            lorsque le rapport de charge moyen après que la charge est effectué $\geq$ b,

                (i) de recherche de l'existence ou non d'une unité modulaire de conversion de fréquence (112.1, 112.2, ..., 112.N) ne participant pas au fonctionnement,
                (ii) si l'unité modulaire de conversion de fréquence ne participant pas au fonctionnement existe, de démarrage de l'unité modulaire de conversion de fréquence (112.1, 112.2, ..., 112.N) ne participant pas au fonctionnement,
                (iii) de calcul d'un rapport de charge moyen de l'unité modulaire de conversion de fréquence de fonctionnement qui vient de démarrer et des unités modulaires de conversion de fréquence de fonctionnement,
                (iv) de transmission d'une commande d'ajustement de fréquence à l'unité modulaire de conversion de fréquence de fonctionnement qui vient de démarrer et aux unités modulaires de conversion de fréquence de fonctionnement ;

            lorsque le rapport de charge moyen après que la charge est effectué < b, ou que le rapport de charge moyen après que la charge est effectué $\geq$ b et l'unité modulaire de conversion de fréquence (112.1, 112.2, ..., 112.N) ne participant pas au fonctionnement n'est pas trouvée,

(i) de calcul d'un rapport de charge moyen des unités modulaires de conversion de fréquence (112.1, 112.2, ..., 112.N) participant au fonctionnement,
(ii) de transmission d'une commande d'ajustement de fréquence aux unités modulaires de conversion de fréquence de fonctionnement ; et/ou

dans lequel la plage de rapport de charge optimisé a une valeur minimale a de la plage de rapport de charge optimisé et une valeur maximale b de la plage de rapport de charge optimisé, et dans lequel l'opération de charge comprend les étapes :

- selon la quantité d'ajustement d'énergie, de calcul d'un rapport de charge moyen de chaque unité modulaire de conversion de fréquence de fonctionnement après que la décharge est effectuée ;
- de comparaison du rapport de charge moyen après que la décharge est effectuée avec a ;

lorsque le rapport de charge moyen après que la décharge est effectuée ≤ a,

(i) de recherche de l'existence ou non d'une unité modulaire de conversion de fréquence pouvant être arrêtée,
(ii) si l'unité modulaire de conversion de fréquence pouvant être arrêtée est trouvée, de décharge de l'unité modulaire de conversion de fréquence pouvant être arrêtée trouvée et de provocation de son arrêt,
(iii) de calcul d'un rapport de charge moyen des unités modulaires de conversion de fréquence de fonctionnement autres que l'unité modulaire de conversion de fréquence d'arrêt,
(iv) de transmission d'une commande d'ajustement de fréquence aux unités modulaires de conversion de fréquence de fonctionnement autres que l'unité modulaire de conversion de fréquence d'arrêt ;

lorsque le rapport de charge moyen après que la décharge est effectuée > a, ou lorsque le rapport de charge moyen après que la décharge est effectuée ≤ a et que l'unité modulaire de conversion de fréquence pouvant être arrêtée n'est pas trouvée,

(i) de calcul d'un rapport de charge moyen des unités modulaires de conversion de fréquence de fonctionnement,
(ii) de transmission d'une commande d'ajustement de fréquence aux unités modulaires de conversion de fréquence de fonctionnement.

3. Procédé selon l'une des revendications 1 à 2,

dans lequel l'étape de décharge comprend la décharge d'une unité modulaire de conversion de fréquence avec le temps de fonctionnement le plus long ; et/ou
dans lequel l'étape de transmission d'une commande de réglage de fréquence à l'unité modulaire de conversion de fréquence de fonctionnement comprend une étape :
lorsque les unités modulaires de conversion de fréquence de fonctionnement sont déjà à une fréquence la plus basse, de non-ajustement des unités modulaires de conversion de fréquence de fonctionnement, amenant ainsi les unités modulaires de conversion de fréquence de fonctionnement à continuer de fonctionner à la fréquence la plus basse.

4. Procédé selon la revendication 2,
dans lequel l'étape de transmission d'une commande d'ajustement de fréquence à l'unité modulaire de conversion de fréquence de fonctionnement qui vient de démarrer et aux unités modulaires de conversion de fréquence de fonctionnement comprend les étapes :

- de calcul d'une fréquence totale d'unités modulaires de conversion de fréquence chargeables de l'ensemble modulaire de conversion de fréquence (102) ;
- de détermination d'un coefficient d'ajustement d'énergie de l'ensemble modulaire de conversion de fréquence (102) en fonction du rapport de charge et d'un coefficient de correction de variation de température d'eau ;
- de calcul d'une quantité totale de conversion-élévation de fréquence en fonction de la fréquence totale de l'unité modulaire de conversion de fréquence chargeable et du coefficient d'ajustement d'énergie ;

- de calcul de fréquences de l'unité modulaire de conversion de fréquence de fonctionnement qui vient de démarrer et des unités modulaires de conversion de fréquence de fonctionnement après que la charge est effectuée, selon la quantité totale de conversion-élévation de fréquence ;

- de calcul de quantités de variation de fréquence selon les différences entre les fréquences de l'unité modulaire de conversion de fréquence de fonctionnement qui vient de démarrer et les unités modulaires de conversion de fréquence de fonctionnement après que la charge est effectuée et une fréquence de fonctionnement actuelle ;

- de calcul de vitesses de fonctionnement de l'unité modulaire de conversion de fréquence de fonctionnement après que la charge est effectuée ;

- de calcul d'une vitesse de fonctionnement moyenne des unités modulaires de conversion de fréquence de fonctionnement autres que l'unité modulaire de conversion de fréquence qui vient de démarrer selon les vitesses de fonctionnement des unités modulaires de conversion de fréquence de fonctionnement après que la charge est effectuée ; et

- de calcul d'une fréquence convertie en élévation/abaissement en fonction d'une valeur de différence entre la vitesse de fonctionnement moyenne et la vitesse de fonctionnement de chacune des unités modulaires de conversion de fréquence de fonctionnement autres que l'unité modulaire de conversion de fréquence qui vient de démarrer, et de transmission de la commande d'ajustement de fréquence à chacune des unités modulaires de conversion de fréquence de fonctionnement autre que l'unité modulaire de conversion de fréquence qui vient de démarrer.

5.  Procédé selon la revendication 2, dans lequel l'étape de transmission d'une commande d'ajustement de fréquence aux unités modulaires de conversion de fréquence de fonctionnement comprend les étapes :

- de calcul d'une fréquence totale des unités modulaires de conversion de fréquence chargeables dans l'ensemble modulaire de conversion de fréquence (102) ;

- de détermination d'un coefficient d'ajustement d'énergie de l'ensemble modulaire de convertisseurs de fréquence en fonction du rapport de charge et du coefficient de correction de variation de température d'eau ;

- de calcul d'une quantité totale de conversion-élévation de fréquence en fonction de la fréquence totale des unités modulaires de conversion de fréquence chargeables et du coefficient d'ajustement d'énergie ;

- selon la quantité totale de conversion-élévation de fréquence, de calcul de la fréquence des unités modulaires de conversion de fréquence de fonctionnement après que la charge est effectuée ;

- de calcul de quantités de variation de fréquence selon des valeurs de différence entre les fréquences des unités modulaires de conversion de fréquence de fonctionnement après que la charge est effectuée et la fréquence de fonctionnement actuelle ;

- de calcul de vitesses de fonctionnement des unités modulaires de conversion de fréquence de fonctionnement après que la charge est effectuée ;

- selon les vitesses de fonctionnement des unités modulaires de conversion de fréquence de fonctionnement après que la charge est effectuée, de calcul d'une vitesse de fonctionnement moyenne des unités modulaires de conversion de fréquence de fonctionnement après que la charge est effectuée ; et

- de calcul d'une fréquence convertie en élévation/abaissement en fonction d'une valeur de différence entre la vitesse de fonctionnement moyenne et la vitesse de fonctionnement de chacune des unités modulaires de conversion de fréquence de fonctionnement après que la charge est effectuée, et de transmission de la commande d'ajustement de fréquence à chacune des unités modulaires de conversion de fréquence de fonctionnement.

6.  Procédé selon la revendication 2, dans lequel l'étape de transmission d'une étape de commande de réglage aux unités modulaires de fréquence de fonctionnement autres que l'unité modulaire de conversion de fréquence d'arrêt comprend les étapes :

- de calcul d'une fréquence totale des unités modulaires de conversion de fréquence chargeables dans l'ensemble modulaire de conversion de fréquence (102) ;

- de détermination d'un coefficient d'ajustement d'énergie de l'ensemble modulaire de convertisseurs de fréquence en fonction du rapport de décharge et du coefficient de correction de variation de température d'eau ;

- de calcul d'une quantité totale de conversion-abaissement de fréquence en fonction de la fréquence totale des unités modulaires de conversion de fréquence chargeables et du coefficient d'ajustement d'énergie ;

- selon la quantité totale de conversion-abaissement de fréquence, de calcul de la fréquence des unités modulaires de conversion de fréquence de fonctionnement autres que l'unité modulaire de conversion de fréquence déchargée après que la décharge est effectuée ;

- de calcul de quantités de variation de fréquence selon des valeurs de différence entre les fréquences des unités modulaires de conversion de fréquence de fonctionnement après que la décharge est effectuée et la fréquence de fonctionnement actuelle ;

- de calcul de vitesses de fonctionnement des unités modulaires de conversion de fréquence de fonctionnement après que la décharge est effectuée ;

- de calcul d'une vitesse de fonctionnement moyenne des unités modulaires de conversion de fréquence de fonctionnement autres que les fréquences déchargées selon les vitesses de fonctionnement des unités modulaires de conversion de fréquence de fonctionnement après que la décharge est effectuée ; et

- de calcul d'une fréquence convertie en élévation/abaissement en fonction d'une valeur de différence entre la vitesse de fonctionnement moyenne et la vitesse de fonctionnement de chacune des unités modulaires de conversion de fréquence de fonctionnement autres que l'unité modulaire de conversion de fréquence déchargée après que la décharge est effectuée, et de transmission de la commande d'ajustement de fréquence à chacune des unités modulaires de conversion de fréquence de fonctionnement autres que l'unité modulaire de conversion de fréquence qui vient de démarrer.

7. Procédé selon la revendication 2, dans lequel l'étape de transmission d'une commande d'ajustement de fréquence aux unités modulaires de conversion de fréquence de fonctionnement comprend les étapes :

   - de calcul d'une fréquence totale des unités modulaires de conversion de fréquence chargeables dans l'ensemble modulaire de conversion de fréquence (102) ;

   - de détermination d'un coefficient d'ajustement d'énergie de l'ensemble modulaire de convertisseurs de fréquence en fonction du rapport de charge et du coefficient de correction de variation de température d'eau ;

   - de détermination d'une quantité totale de conversion-abaissement de fréquence en fonction de la fréquence totale des unités modulaires de conversion de fréquence chargeables et du coefficient d'ajustement d'énergie ;

- selon la quantité totale de conversion-abaissement de fréquence, de calcul de la fréquence des unités modulaires de conversion de fréquence de fonctionnement après que la décharge est effectuée ;

- de calcul de quantités de variation de fréquence selon des valeurs de différence entre les fréquences des unités modulaires de conversion de fréquence de fonctionnement après que la décharge est effectuée et la fréquence de fonctionnement actuelle ;

- de calcul de vitesses de fonctionnement des unités modulaires de conversion de fréquence de fonctionnement après que la décharge est effectuée ;

- de calcul d'une vitesse de fonctionnement moyen des unités modulaires de conversion de fréquence de fonctionnement après que la décharge est effectuée selon les vitesses de fonctionnement des unités modulaires de conversion de fréquence de fonctionnement après que la décharge est effectuée ; et

- de calcul d'une fréquence convertie en élévation/abaissement en fonction d'une valeur de différence entre la vitesse de fonctionnement moyenne et la vitesse de fonctionnement de chacune des unités modulaires de conversion de fréquence de fonctionnement après que la décharge est effectuée, et de transmission de la commande d'ajustement de fréquence à chacune des unités modulaires de conversion de fréquence de fonctionnement.

8. Procédé selon l'une des revendications 1 à 7, dans lequel l'étape de réglage fin de chacune des unités modulaires de conversion de fréquence de fonctionnement selon un rapport de charge moyen de la pluralité d'unités modulaires de conversion de fréquence (112.1, 112.2, ..., 112.N) comprend les étapes :

   - de calcul d'une fréquence totale des unités modulaires de conversion de fréquence de fonctionnement ;

   - de calcul d'une fréquence moyenne des unités modulaires de conversion de fréquence de fonctionnement en fonction de la fréquence totale des unités modulaires de conversion de fréquence de fonctionnement ;

   - de calcul d'une quantité de variation de fréquence selon une différence entre la fréquence moyenne des unités modulaires de conversion de fréquence de fonctionnement et la fréquence de fonctionnement actuelle ;

   - de calcul de vitesses de fonctionnement des unités modulaires de conversion de fréquence de fonctionnement après que la charge/décharge est effectuée ;

- de calcul d'une vitesse de fonctionnement moyenne des unités modulaires de conversion de fréquence de fonctionnement après que la charge/décharge est effectuée selon les taux de fonctionnement de la charge/décharge des unités modulaires de conversion de fréquence de fonctionnement est effectué ; et

- de calcul d'une fréquence convertie en élévation/abaissement en fonction d'une valeur de différence entre la vitesse de fonctionnement moyenne et la vitesse de fonctionnement de chacune des unités modulaires de conversion de fréquence de fonctionnement, et de transmission de la commande d'ajustement de fréquence à chacune des unités modulaires de conversion de fréquence de fonctionnement.

9. Procédé selon l'une des revendications 1 à 8,

dans lequel les différentes opérations de l'ensemble modulaire (102) comprennent les étapes :

(i) lorsque Tw-Tw.target>D dans une condition de travail de réfrigération, ou lorsque Tw.target-Tw>D dans une condition de travail de chauffage, de réglage comme opération de charge ;

(ii) lorsque -D≤Tw-Tw.target≤D dans la condition de travail de réfrigération, ou lorsque -D≤Tw.target-Tw≤D dans la condition de travail de chauffage, de réglage comme opération de maintien ;

(iii) lorsque Tw-Tw.target<-D dans la condition de travail de réfrigération, ou lorsque Tw.target-Tw<-D dans la condition de travail de chauffage, de réglage comme opération de décharge ;

dans lequel la valeur D peut être réglée en fonction d'un niveau de précision de régulation de la température de l'eau ; et

dans lequel le rapport de charge de l'ensemble modulaire (102) dans une zone de charge est réglé sur un grand rapport de charge, le rapport de charge/décharge de l'ensemble modulaire (102) dans une zone de réglage fin est réglé sur un petit rapport de charge ou un petit rapport de décharge, et le rapport de décharge de l'ensemble modulaire dans la zone de décharge est réglé sur un grand rapport de décharge.

10. Procédé selon l'une des revendications 1 à 9,

dans lequel le procédé comprend en outre les étapes :

- de détermination d'une valeur minimale (a) de la plage de rapport de charge optimisé et d'une valeur maximale (b) de la plage de rapport de charge optimisé ;

dans lequel

$$a = (n\text{-}1)/n*t,\ a \geq s\ et\ a < t\text{-}x1\ ;$$

dans lequel

$$b = t + t/n,\ b \leq s'\ et\ b > t + x2,$$

où n désigne un nombre total de modules dont le fonctionnement n'est pas limité dans le système, t désigne un rapport de charge lorsque le module est à l'efficacité énergétique de fonctionnement la plus élevée (cop MAX), s désigne un rapport de charge de démarrage, s' désigne une charge correspondante ayant la valeur d'efficacité énergétique de fonctionnement la plus élevée (cop MAX) en tant que rapport de charge de démarrage lorsque le rapport de charge est supérieur à t, et x1 et x2 sont des écarts réglés pour empêcher des démarrages/arrêts fréquents du module.

11. Procédé selon l'une quelconque des revendications 1 à 10,
dans lequel l'ensemble modulaire (102) est en communication fluidique avec une pluralité d'unités intérieures (124.1, 124.2, ..., 124.N) et une pluralité d'unités de chauffage par le sol (132.1, 132.2, ..., 132.N) par l'intermédiaire de la conduite d'eau (10).

12. Système de climatisation, comprenant un ensemble modulaire (102) qui comporte une pluralité d'unités modulaires de conversion de fréquence (112.1, 112.2, ..., 112.N), **caractérisé en ce que** le système de climatisation comprend :

- un dispositif de commande principal (118.1), dans lequel

l'une de la pluralité d'unités modulaires de conversion de fréquence (112.1, 112.2, ..., 112.N) est réglée au moyen du dispositif de commande principal (118.1) en tant qu'unité modulaire de conversion de fréquence principale (112.1), tandis que le reste de la pluralité d'unités modulaires de conversion de fréquence (112.1, 112.2, ..., 112.N) sont réglées au moyen du dispositif de commande principal (118.1) en tant qu'unités modulaires de conversion de fréquence esclaves (1, 2, ..., N-1) ;

le dispositif de commande principal (118.1) est connecté à l'unité modulaire de conversion de fréquence principale (112.1) et également connecté aux unités modulaires de conversion de fréquence esclaves (1, 2, ..., N-1) ;

chacune des unités modulaires de conversion de fréquence (112.1, 112.2, ..., 112.N) est en communication fluidique avec une conduite d'eau (110), la conduite d'eau (110) recevant de l'eau pour le réglage de la température et étant dotée d'un capteur de température d'eau (108) pour détecter une température actuelle (Tw) de l'eau, représentée par le symbole Tw ; et le dispositif de commande principal (118.1) est conçu pour effectuer (1) une opération de charge, (2) une opération de décharge, ou (3) une opération de maintien sur la pluralité d'unités modulaires de conversion de fréquence (112.1, 112.2, ..., 112.N) selon une quantité d'ajustement d'énergie telle qu'entrée selon le procédé selon l'une quelconque des revendications 1 à 11.

13. Système de climatisation selon la revendication 12, dans lequel le dispositif de commande principal (118.1) est agencé sur l'unité modulaire de conversion de fréquence principale (112.1) ; et/ou dans lequel l'ensemble modulaire (102) est en communication fluidique avec une pluralité d'unités intérieures (124.1, 124.2, ..., 124.N) et une pluralité d'unités de chauffage par le sol (132.1, 132.2, ..., 132.N).

FIG. 1

**FIG. 2**

_118_

_302_

_304_

processor

_308_

_309_

input means (cabled)

_312_

_311_

output means (cabled)

_314_

_313_

wireless communication means

_318_

memory

_302_

program

**FIG. 3**

FIG. 4

412

From 408

504

Existent  Searching a
startable module

506

The number of operating
units is 1

508

Non-existent

The set holds standby

502

Non-existent  Determining
whether any module
has been started

Existent

512

Determining the number
of operating units

Loading the module
with the shortest
operating time

507

Return to
402

Return to 402

514

Calculating an average load
ratio after loading
the set capability

522

523  Existent  Search a startable module

increase the number
of operating units by one

524

Non-existent

L≥b

516

Comparing the average
load ratio with
a set start point

L<b

Start the module with the shortest
operating time, calculate the average
load ratio, transmit the frequency
adjustment command to other modules
according to the average load ratio

518

Transmitting a frequency load
amount to respective modules
according to the average load ratio
after load is performed

Return to 402

**FIG. 5**

414

From 408

602

Calculate an average load ratio of the set; and transmit a frequency adjustment command to the modules with an deviated load ratio

Return to 402

**FIG. 6**

From 408

416

702 — Determine the number of operating units

704 — Calculate average load ratio after unloading the set capability

706 — Compare the average load ratio with the set shutdown point

L ≤ a

708 — Search a shutdown-able module

Existent

Non-existent

712 — Decrease the number of operating units by one

L > a

716 — Calculate an average load ratio according to the unload amount, transmit a frequency unload command to the operating modules; if there exists a module that is already at the lowest frequency, the module keeps operating at the lowest frequency

714 — Shut down the module with the longest operating time, calculate the average load ratio, and transmit a command to other operating modules based on the average load ratio

Return to 402

**FIG. 7**

—518

```
          ┌──────────────────────┐  —802
          │  Calculate the total frequency │
          │     up-conversion amount      │
          └──────────────────────┘
                      │
                      ▼
          ┌──────────────────────┐  —804
          │ Calculate the frequencies of the │
          │ frequency conversion modular   │
          │  units after load is performed  │
          └──────────────────────┘
                      │
                      ▼
          ┌──────────────────────┐  —806
          │   Calculate the frequency   │
          │     variation amounts of    │
          │     the operating modules   │
          └──────────────────────┘
                      │
                      ▼
          ┌──────────────────────┐  —808
          │ Calculate the running rate Rrun.n of │
          │  each module with the frequency   │
          │     variation amount added        │
          └──────────────────────┘
                      │
                      ▼
          ┌──────────────────────┐  —810
          │  The main unit calculates the   │
          │ average running rate Rave.run   │
          │ according to the running rates  │
          │      of respective modules      │
          └──────────────────────┘
                      │
                      ▼
          ┌──────────────────────┐  —812
          │ Calculate the up-converted/down-converted │
          │   frequency of respective units according to a │
          │ difference between the average running rate and the │
          │ running rate of the module, and transmits a frequency │
          │      adjusting command to the each module      │
          └──────────────────────┘
```

**FIG. 8**

524

902

Calculate a total frequency
up-conversion amount of the set

904

After one module has been loaded,
calculate frequencies of other modules

906

After one module has been loaded,
calculate frequency variation amounts of other modules

908

Calculate the running rate Rrun.n of each module
with the frequency variation amount added

912

Transmit a start frequency to the just started module

914

The main unit calculates the average running rate Rave.run of
other modules according to the running rate of each module

916

Calculate the up-converted/down-converted frequency of each module
based on the difference value between the average running rate and the running
rate of the module, and transmit the frequency adjustment command to each module

**FIG. 9**

**FIG. 10**

FIG. 11

716

Calculate a total frequency
down-conversion amount of set — 1202

Calculate frequencies of the
frequency conversion module units
after unload is performed — 1204

Calculate the frequency
variation amounts of already
operating modules — 1206

Calculate the running rate $R_{run.n}$ of each module
with the frequency variation amount added — 1208

The main unit calculates the average
running rate $R_{ave.run}$ according to
the running rate of each module — 1210

Calculate the up-converted/down-converted
frequency of each unit based on difference
between the average running rate and the
running rate of the module, and transmit a
frequency adjustment command to each module — 1212

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012174609 A1